Europäisches Patentamt

European Patent Office

Office européen des brevets

(19)

(11) **EP 0 815 418 B1**

(12) **EUROPEAN PATENT SPECIFICATION**

(45) Date of publication and mention
of the grant of the patent:
**31.10.2001 Bulletin 2001/44**

(51) Int Cl.[7]: **G01F 23/26**

(86) International application number:
**PCT/US96/03745**

(21) Application number: **96908865.7**

(22) Date of filing: **20.03.1996**

(87) International publication number:
**WO 96/29579 (26.09.1996 Gazette 1996/43)**

(54) **METHOD AND APPARATUS FOR SENSING A LACK OF MOTION**

VERFAHREN UND VORRICHTUNG ZUR DETEKTIERUNG DES FEHLENS VON BEWEGUNG

PROCEDE ET APPAREIL POUR LA DETECTION DE L'ABSENCE DE MOUVEMENT

(84) Designated Contracting States:
**DE FR GB IT SE**

(30) Priority: **20.03.1995 US 406508**
**20.03.1995 US 406695**

(43) Date of publication of application:
**07.01.1998 Bulletin 1998/02**

(73) Proprietor: **Scott Technologies, Inc.**
**Richmond, VA 23295 (US)**

(72) Inventors:
• **POWER, Wendy**
**Westford, MA 01886 (US)**
• **REED, Michael, A.**
**Chelmsford, MA 01824-4641 (US)**
• **FRUSTACI, Dominick, J.**
**Williamsville, NY 14221 (US)**
• **LAROCQUE, Gerald**
**Belford, MA 01730 (US)**
• **MARCHETTI, Brenda**
**Westford, MA 01886 (US)**

(74) Representative: **Koepe, Gerd L., Dipl.-Chem. et al**
**Blumbach, Kramer & Partner GbR,**
**Patentanwälte,**
**Radeckestrasse 43**
**81245 München (DE)**

(56) References cited:
**DE-A- 4 329 571**       **US-A- 4 417 473**
**US-A- 4 589 077**       **US-A- 5 275 007**
**US-A- 5 357 758**

• **CRYOGENICS, vol. 30, no. 6, June 1990,**
**GUILDFORD GB, pages 538-544, XP000127927**
**I.V. VELICHKOV ET AL.: "Capacitive level meters**
**for cryogenic liquids with continuos read-out"**

**Description**

The present invention relates to a device and a method for sensing a lack of motion of the device for a predetermined period of time. More particularly, the invention relates to a device and a method for sensing a lack of motion by means of a capacitance measurement in the device wherein a cryogenic liquid contained in a Dewar container forming a part of the device serves as a dielectric between two oppositely charged conductors.

The capacitance between two conducting members is proportional to the amount of opposite and therefore mutually attractive electrical charges that can be gathered on the conductors in the presence of an electrical potential differential. The resulting electric field that is set up between the conductors holds the opposite charges captive. The electrical storage capacity of an electrical capacitor can be changed by placing a foreign material between the conductors. Materials which have this property of changing the effective field strength and therefore, the amount of electrical charge that is held on proximately spaced conductors are known as dielectrics. The ability of a particular dielectric medium to cause an increase in the charge holding capacity of conductors in response to a similar applied electric potential differential placed on a capacitor is characteristic of the medium's dielectric coefficient, i.e., the ratio of the charge holding capacity or capacitance when the conducting members are separated by the foreign material or dielectric medium and when the conductors are separated by vacuum. In the present invention, dielectric coefficients can range from about one for ambient air to as high as 80 for distilled water.

The measurement of capacitance between two proximately spaced conductors having a known dielectric medium therebetween is a well known technique that is extensively used in the gauging of a liquid level. U.S. Patent No. 4,589,077 (to Pope) describes a liquid level measuring apparatus for a tank comprising an elongated multi-stage capacitance probe that includes a column of capacitors extending in a known direction through the liquid interface. By identifying the capacitor in the column at the liquid level and the capacitor directly below the liquid level, the height of the liquid level within the tank is computed. If the volume of the tank is known, as a function of height, the volume of liquid remaining in the tank can also be computed. This measuring apparatus requires that the tank be motionless and of a known relative orientation.

U.S. Patent No. 4,428,232 (to Tanaka et al.) describes a capacitance liquid level detector comprising a pair of helically coiled electrodes extending vertically in a container and at least partially submerged in a liquid stored therein. The upper and lower ends of the coils are connected to the respective ends of the container. An oscillator circuit of the resistance capacity type having a variable condenser consisting of the electrodes is arranged to oscillate at a frequency that is dependent upon the variation of the electrostatic capacitance between the electrodes so as to indicate the level of the stored liquid. This detector apparatus requires that the storage container be motionless and of a known relative orientation.

Another type of cryogenic liquid level detector apparatus is set forth in U.S. Patent No. 3,943,767 (to Efferson). This patent describes a detector apparatus system that comprises a filament of superconducting material vertically positioned inside the Dewar. A current is passed through the filament and as the gas-liquid interface moves along the filament, the voltage generated is a measure of the level of the gas-liquid interface. This measuring apparatus also requires that the tank remain motionless during the measurement and have a known relative orientation. Finally, U.S. Patent No. 5,230,439 to Klok et al. describes a level detector comprising two elongated and parallel electrodes disposed inside a container. The electrodes are energized to provide a liquid level signal. This detector is not particularly useful for a container in motion and there is no means for indicating the inclination of the container.

A series of electrodes wrapped in a spiral pattern around a pipe along a portion of the length thereof has been suggested for the purpose of capacitive sensing of gaseous fraction in two-phase flow of a fluid through the pipe. See "Capacitive Sensing of Gaseous Fraction in Two-Phase Flow," <u>NASA Tech Briefs,</u> January, 1995.

The document DE-A 43 29 571 (to Doduco GmbH & Co.) discloses a capacitive level sensor with a tilt sensing facility.

U.S. Patent No. 4,417,473 (to E. Tward et al.) is concerned with a sensor for measuring the capacitive level which sensor generally has a cylindrical shape.

U. S. Patent No. 5,275,007 (to T. A. Neeser) relates to a level sensor which uses a measurement of the pressure inside a closed container in order to determine the liquid level within said container.

The document "I. V. Velichkov et al.; Capacitive Level Meters for Cryogenic Liquids with Continuous Read-Out; Cryogenics 30 (1990), 538 to 544" discloses the measurement of the capacitive level in insulating containers as for example Dewar flasks by a suitable capacitive sensor.

As previously mentioned, the sensor apparatus of the present invention is also useful for indicating the absence of motion imparted to the container by indicating the change in inclination, or lack thereof, between two measurement events. An exemplary inclinometer according to the prior art is shown in U.S. Patent No. 4,912,662 to Butler et al. Various commercially available devices have been provided for the purpose of functioning to signal "man-down".

The present invention provides a device to be worn by a user to signal a lack of motion of the device for a predetermined period of time, said device comprising:

- a container means having a liquid therein;
- means for sensing contact by the liquid with each of a plurality of zones into which the container means is divided at each of a plurality of times over the predetermined period of time and for obtaining a set of values representative of percentage of contact of the liquid with each of the zones at each of the times;
- means for comparing the sets of values; and
- means for signalling when the sets of values are substantially the same.

The invention also provides for a method of sensing a lack of motion of a container means for a predetermined period of time, said method comprising the steps of:

- providing the container means to contain a liquid;
- sensing contact by the liquid with each of a plurality of zones into which the container means is divided at each of a plurality of times over the predetermined period of time thereby obtaining a set of values representative of percentage of contact of the liquid with each of the zones at each of the times; and
- comparing the sets of values whereby to sense a lack of motion of the container means if the sets of values are substantially the same.

The present detector means comprise capacitor means having a first conductor means, preferably comprising the inner container wall, or a conductive member positioned adjacent to the container inner shell wall and a second conductor means preferably comprising a plurality of axially spaced and concentric conductor bands mounted inside the container in a proximately spaced and parallel relationship with respect to the first conductor means. Each conductor band serves as a separate and distinct capacitor formed by that portion of the proximately spaced first conductor means disposed adjacent to the individual conductor band. A computer calculates the capacitance value of each capacitor formed by the individual conductor bands and the adjacent portion of the first conductor means, independent of the other bands, and compares these capacitance measurements to a set of reference capacitance values corresponding to a known volume of cryogenic liquid in the container at a known inclination.

In the case of a Dewar container having a quantity of liquefied-gas as the cryogenic liquid, such as liquid air made up of a ratio of liquid oxygen and liquid nitrogen, the capacitance value is influenced by the amount of liquid phase air that is present in the space provided between the first and second conductor means. The dielectric coefficient for the liquid phase of oxygen and nitrogen is approximately 1.5 times greater than the value for the gas phase for each molecular constituent. This property causes the capacitance value to change by the same ratio when the space between the conductors comprising the capacitor means is partially filled with the cryogenic liquid in comparison to a base level or reference capacitance taken when the entire volume is filled with air as a gas. The reference capacitance can relate to any known value with which other capacitance measurements can be compared. The magnitude of the capacitance value differential is directly related to the quantity of the liquid between the conductors comprising the capacitor means, and therefore provides an indication of the quantity of liquid in the container.

The differential capacitance values are also useful for indicating the extent of physical activity of the user of the container. Regardless of whether the user is active or incapacitated, the respective capacitance measurements taken at spaced intervals of time will each indicate a capacitance. When the plurality of sequential capacitance measurements fall outside of a narrow deviation band or "window," it is interpreted that the user is active and therefore does not require assistance. However, when the capacitance measurements settle into the narrow deviation window and remain there for a predetermined period of time, a man-down event is triggered to indicate that the user of the container is not active, and may in fact be in peril.

The foregoing and additional advantages are characterizing features of the present invention that will become clearly apparent upon a reading of the ensuing detailed description together with the included drawings wherein:

Fig. 1 is a perspective view, partly in schematic, of a cryogenic liquid Dewar container 10 for use with a liquid quantity sensor of the present invention.
Fig. 2 is a partly schematic and partly cross-sectioned view showing the cryogenic liquid Dewar container 10 of the present invention shown in Fig. 1.
Fig. 3 is a cross-sectioned view along line 3-3 of Fig. 2.
Fig. 4 is an enlarged detailed view of a portion of the cryogenic liquid Dewar container 10 shown in Fig. 2.
Fig. 5 is an enlarged detailed view of a portion of the cryogenic liquid Dewar container 10 shown in Fig. 2.
Fig. 6 is a block diagram of the cryogenic liquid quantity sensor of the present invention.
Fig. 7 is a graph showing the variation in coverage for each of five conductive bands as a container orientation changes from vertical to horizontal at a 35 percent fill level.
Fig. 8 is a flow chart of a process embodying the present invention for utilizing measured percentages of conductive band or zonal contact to estimate the percentage fill and the spatial orientation of a container.

Fig. 9 is a block diagram of apparatus for sensing lack of motion of the container.

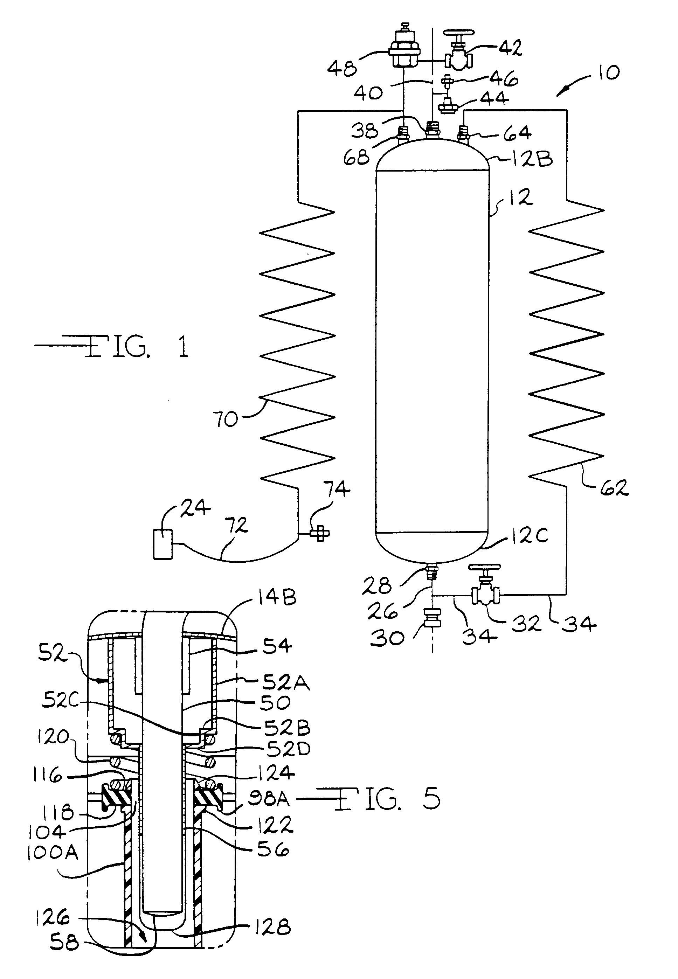

Turning now to the drawings, Figs. 1 to 9 show a sensor means according to the present invention that is disposed inside a Dewar container 10 to detect and indicate the quantity of cryogenic fluid remaining in the Dewar. It should be understood that container 10 is merely exemplary and represents one embodiment of a container that is useful with the sensor means of the present invention. In that respect, the present sensor means is useful with many types of containers whose shape and construction are only limited by the imagination of those skilled in the art. For example, while container 10 is shown having a generally cylindrical shape closed at both ends, the present sensor means can be adapted for use with containers having a myriad of shapes other than cylindrical and the container need not be closed.

The sensor means will be described in detail hereinafter, but first the structure of container 10 is described.

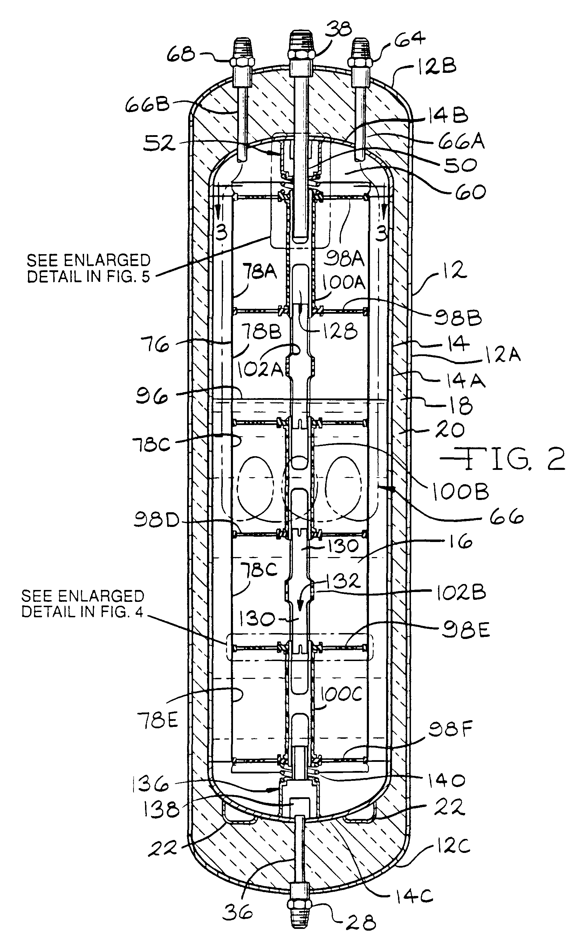

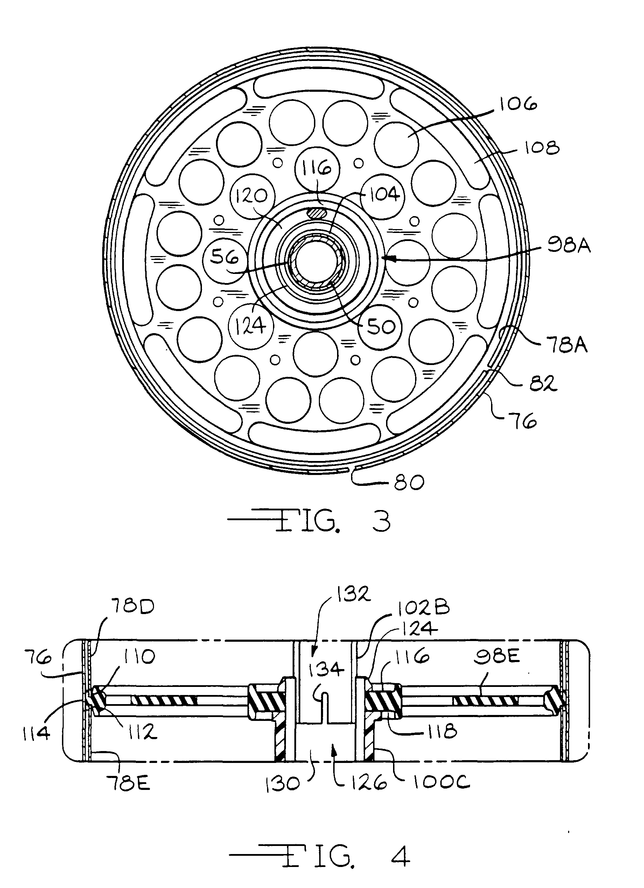

Container 10 is shown in Fig. 1 partly in perspective view, partly in schematic and comprises an outer container means or outer shell 12 mounted around and surrounding an inner container means or inner shell 14 (Fig. 2) provided with a cryogenic liquid 16 such as a quantity of liquefied-gas. As shown in cross-section in Fig. 2, the outer shell 12 includes a generally cylindrical side wall 12A extending along and around the longitudinal axis of the container 10 with first and second dome portions 12B and 12C closing the opposed ends thereof. Similarly, the inner shell 14 has a cylindrical sidewall 14A extending along and around the longitudinal axis with first and second dome portions 14B and 14C closing the opposed ends thereof.

As further shown in Fig. 2, the space 18 formed between the inner and outer shells 12 and 14 is evacuated to a prescribed level relative to ambient pressure and provided with an insulation material 20 that helps thermally insulate the cryogenic liquid 16. A getter material 22 is mounted on the outside of the second dome 14C to absorb any residual gas molecules in the evacuated space 18 between the shells 12 and 14. Often the cryogenic liquid 16 is a liquefied air mixture having an enriched oxygen concentration that serves to supply breathable air to a pressure regulator and associated facepiece 24 (shown in block representation in Fig. 1), as is well known to those of ordinary skill in the art.

As shown schematically in Fig. 1, an input/output fluid conduit 26 extends from a threaded nipple 28, or a similar coupling means mounted on the second dome 12C of outer shell 12. Conduit 26 leads to a quick-disconnect coupling 30 that serves as a connection means for connecting the Dewar container 10 to a pressurized liquefied-gas supply (not shown) for filling the cryogenic liquid 16 into inner shell 14. A manual shutoff valve 32 is connected to the input/output conduit 26 between nipple 28 and coupling 30 via conduit 34. The pressure of the cryogenic liquid 16 inside the inner shell 14 is preferably held at a minimum of about 4,14 bar (60 psi).

As shown in Fig. 2, nipple 28 leads inside the outer shell 12 to a conduit 36 extending through the evacuated space 18 to enter the inner shell 14 in communication with the contents contained therein. Similarly, the first dome 12B of the outer shell 12 is provided with an axially positioned threaded nipple 38, that serves to connect Dewar container 10 to exterior components located outside the enclosure of the outer shell 12. As particularly shown in Fig. 1, nipple 38 is connected by an outlet conduit 40 to a vent valve 42, burst disk 44, a pressure relief valve 46, and an economizer valve 48.

As shown in Fig. 2, nipple 38 leads inside the outer shell 12 to a relatively thin walled conduit 50 entering the inner shell 14 along the longitudinal axis thereof. A relatively thick walled stand-off 52 is mounted on the inside of the first dome 14B, coaxially around conduit 50. Stand-off 52 is shown in enlarged detail in Fig. 5 and comprises a first, large diameter cylindrical portion 52A extending to a first web portion 52B that forms into a second, lesser diameter ring portion 52C. Ring portion 52C in turn extends to a second web 52D that completes stand-off 52. A pair of diametrically opposed openings 54 (only one shown) having a generally square shape, are provided through cylinder portion 52A to provide for fluid flow into and out of the enclosure of the stand-off 52. An inner annular circumference of second web 52D connects to a relatively thin-walled, low thermal conductivity sleeve 56 (Fig. 5) fitted around the outside wall of a portion of conduit 50 in a closely spaced relationship therewith. Stand-off 52 thereby provides support for conduit 50 which in turn provides a low thermal conductivity passage from the evacuated space 18 into the inner shell 14.

Conduit 50 is provided with an open terminal end 58. This provides a sufficient vent space at the upper portion of the inner shell 14 above the opening 58 where a gas pocket 60 (Fig. 2) forms that prevents the inner shell 14 from being overfilled with cryogenic liquid 16. In that respect, when Dewar container 10 is being filled with cryogenic liquid 16 and with valve 42 (Fig. 1) turned to an open position, at such time as liquid 16 blows out through valve 42, the container 10 is filled to the prescribed level as defined by opening 58 in conduit 50. The terminal opening 58 of conduit 50 also provides for passage of conducting wires (not shown) connected to the sensor means of the present invention by hermetic connectors having compression glass seals (not shown), as is well known to those skilled in the art. The sensor means will be explained in detail presently.

As schematically shown in Fig. 1, one end of conduit 34 intersects input/output conduit 26 while the other end leads to a first endothermic heat exchanger 62 mounted outside Dewar container 10. Heat exchanger 62 serves to conduct heat energy from the ambient surroundings to the cryogenic liquid 16, which preferably is liquefied air, to vaporize the liquid to a gas and then to warm the gas. The warmed gas then leaves the first endothermic heat exchanger 62 and reenters the first dome 12B of the outer shell 12 through threaded nipple 64 leading to an inlet conduit 66A of an internal exothermic heat exchanger 66 (Fig. 2) provided inside inner shell 14. Exothermic heat exchanger 66 is shown schematically in Fig. 2 and it serves to conduct a portion of the heat energy imparted to the warmed gas by the first endothermic heat exchanger 62 to the cryogenic liquid 16 remaining inside the inner shell 14.

The outlet conduit 66B of the exothermic heat exchanger 66 connects to a threaded nipple 68 mounted on the first dome 12B. Nipple 68 in turn leads to a second endothermic heat exchanger 70, shown schematically in Fig. 1, which is similar to the first endothermic heat exchanger 62. When the warmed gas leaving the first endothermic heat exchanger 62 moves through the exothermic heat exchanger 66, heat energy is conducted to the cryogenic liquid 16 inside the inner shell 14. The temperature of the gas in heat exchanger 66 is cooled an amount dependent on the flow rate, and the heat energy of the cryogenic liquid 16 inside inner shell 14 is raised a like amount. The cooled gas leaving the internal exothermic heat exchanger 66 then moves to the second endothermic heat exchanger 70, which serves to warm the gas to about ambient temperature. An outboard end of the second endothermic heat exchanger 70 preferably connects to a flexible tube 72 that supplies the warmed gas to the pressure regulator and an associated on-demand facepiece 24 (shown in block representation in Fig. 1), which is worn by a user breathing the air. A pressure relief valve 74 is provided adjacent to the outboard end of the second endothermic heat exchanger 70.

Figs. 2 to 6 further show the sensor means of the present invention for detecting and indicating the quantity of cryogenic liquid 16 in the inner shell 14 of Dewar container 10, independent of the physical motions acting on the container, and independent of the spatial orientation of the container. It should be understood that the sensor means of the present invention is useful for detecting and indicating the liquid quantity in various types of containers and that the sensor means is shown associated with the previously described cryogenic Dewar container 10 by way of example, not limitation.

The liquid quantity sensor of the present invention will first be described in general terms and later in detail.

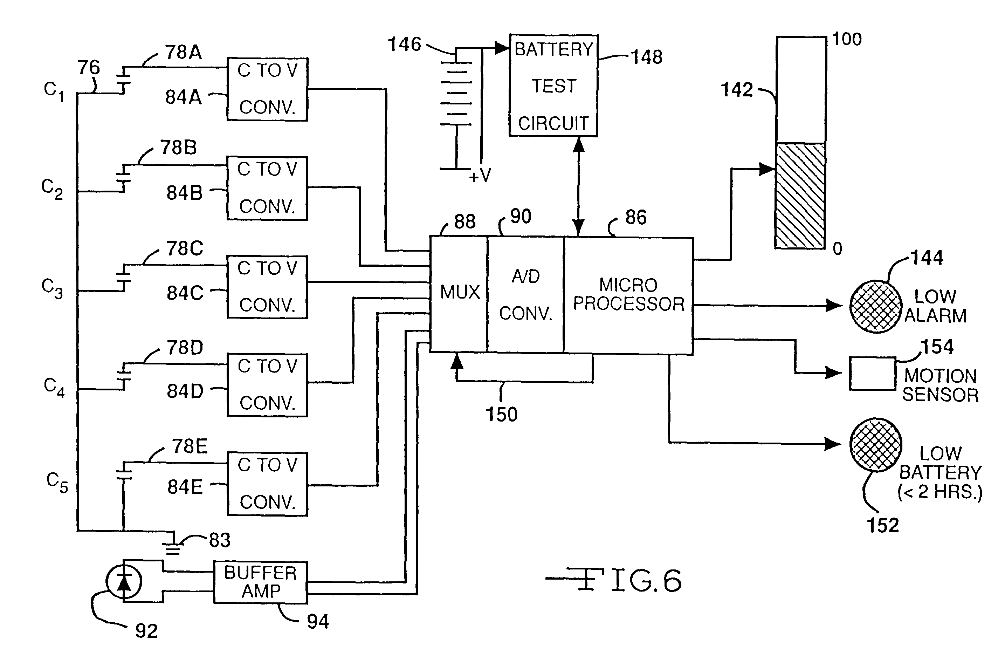

As shown diagrammatically in Fig. 6, the quantity of cryogenic liquid 16 is determined by a capacitance based sensing apparatus using a first, cylindrically shaped conductor 76 (Figs. 2 to 4 and 6) extending along and around the longitudinal axis of container 10 from adjacent to dome 14B of inner shell 14 to a position adjacent to dome 14C, and a plurality of independent conductor bands, indicated as bands 78A to 78E, that together serve as a second conductor means. The conductor 76 and bands 78A to 78E are preferably made of a conductive mesh material that readily enables cryogenic fluid 16 to flow into and out of the space therebetween.

The conductor 76 and bands 78A to 78E can be discontinuous or they can be endless, the former being preferred. As shown in cross-section in Fig. 3, a clearance 80 is preferably provided between the proximate ends of conductor 76 and a clearance 82 is preferably provided between the proximate ends of exemplary band 78A. This prevents buckling and distortion in the conductor 76 and bands 78A to 78E due to temperature variations. What is important is that there is established a substantially uniform electric field generated between conductor 76 and bands 78A to 78E, as will be explained in detail hereinafter. It should also be understood that the clearances 80, 82 are preferably offset with respect to each other so that there is no overlap. This construction helps to minimize the effect the clearances may have on the capacitance measurements made of the generated electric field.

First conductor 76 is mounted inside the inner shell 14 in a coaxial relationship with respect to the longitudinal axis thereof and parallel with respect to the side wall 14A. Conductor 76 is connected to an electrical ground, schematically shown in Fig. 6 at 83, and each of the independent conductor bands 78A to 78E are provided in a proximately spaced and parallel relationship with respect to the first conductor 76 such that each band 78A to 78E "covers" a respective zonal area of the inner surface of first conductor 76 with the gap therebetween remaining relatively small and constant to comprise the capacitance means of the present invention. That way, independent of the spatial orientation of the Dewar container 10, the cryogenic liquid 16 immerses some portion of at least one or more of the independent conductor bands 78A to 78E to serve as a dielectric thereof and change the respective capacitance measurements $C_1$ to $C_5$ of that portion of each of the immersed bands with respect to predetermined baseline capacitance measurements. For example, in the case of the baseline capacitance being derived from an inner shell 14 filled with gas in comparison with the inner shell 14 partially filled with cryogenic liquid 16, the latter capacitance measurement increases due to the greater dielectric constant of the cryogenic liquid 16 versus gas. The magnitude of the capacitive increase is proportionate to the area of each of the various independent bands 78A to 78E immersed in the fluid 16.

As shown in block diagram in Fig. 6, the respective capacitance measurements $C_1$ to $C_5$ derived from each of the plurality of conductor bands 78A to 78E, which divide the area of first conductor 76 into capacitor zones, are fed to respective convertors 84A to 84E. Convertors 84A to 84E in turn respectively send an amplified proportionate voltage measurement to a micro-processor 86 via a multiplexer and an analogue-to-digital convertor, indicated as blocks 88 and 90 respectively. Micro-processor 86 serves as a computer means to process this data along with an input from a cryogenic liquid temperature sensor, indicated as component 92 in Fig. 6, to provide a calculated cryogenic liquid quantity. The temperature measurement is fed to a buffer unit, indicated as block 94 in Fig. 6, and then to computer 86 via multiplexer 88 and A/D convertor 90.

The temperature of the cryogenic liquid is used to correct the calculated liquid quantity and provide a corrected liquid quantity, indicated at 96 in Fig. 2. For example, when the cryogenic liquid 16 comprises a mixture of oxygen and nitrogen, ($O_2/N_2$), the dielectric constant of $O_2/N_2$ is a function of the temperature of the liquid and consequently, the capacitance measurements $C_1$ to $C_5$ will change with the liquid temperature for a fixed zonal coverage ratio. From this temperature measurement, and with the volumetric configuration of Dewar container 10 known, the quantity of cryogenic liquid 16 in the Dewar container 10 can be accurately determined. Also, since the quantity of cryogenic liquid 16 is determinable at any one time by manipulation of the independent capacitance measurements $C_1$ to $C_5$, as described above, the change in cryogenic quantity or a differential quantity measurement is determined by measuring the relative change in the capacitance measurements $C_1$ to $C_5$ from a first reading to a second reading.

As will be explained in detail hereinafter, a database stored in the computer 86 is provided with data tables having reference capacitance values for various percent fill quantities of the cryogenic liquid 16 at various inclinations. Since the area of cryogenic liquid 16 in contact with each of the conductor bands 78A to 78E can be measured independently, the inclination of the Dewar container 10 can be determined without the need of an associated inclinator. Change in inclination is calculated by measuring the relative change in capacitance of each band 78A to 78E from a first capacitance reading taken at a first inclination to a second capacitance reading taken at a second inclination. The calculation of the cryogenic liquid 16 quantity derived from the contact area of the cryogenic liquid 16 and the capacitance means, and the calculation of the inclination of the Dewar container 10 will now be explained in greater detail.

As shown in cross-sectional detail in Figs. 2 to 5, the zonal capacitance measurement system of the present invention is derived from the plurality of conductor bands 78A to 78E aligned in series inside inner shell 14 with each band being in a proximately spaced and parallel relationship with respect to the cylindrically shaped first conductor 76. Conductor 76 is maintained in its parallel relationship with respect to the side wall 14A of the inner shell 14 by a network of insulators 98A to 98F locked to alternating female spacers 100A to 100C and separated by alternating and interconnecting male spacers 102A and 102B. Insulators 98A to 98F, spacers 100A to 100C and spacers 102A and 102B are made of a non-conductive material having a similar coefficient of thermal expansion as conductors 76 and 78A to 78E. This ensures that the gap between conductor 76 and conductors 78A to 78F is maintained at a constant distance of about 0.51 mm (0.020 inches) at the approximate -173°C (- 280°F) operating temperature for Dewar container 10. Additionally, constructing these components of a non-conductive material eliminates any undue stress forces on the components, i.e., 76, 78A, 98A to 98F, 100A to 100C, and 102A and 102B which are assembled into the inner shell 14 at about 21°C (70°F), when they are contacted by the cryogenic liquid 16. The preferred material for insulators 98A to 98F and spacers 100A to 100C and 102A and 102B is TORLON® thermoplastic polymer, which has a similar coefficient of thermal expansion as type 316 stainless steel used for conductors 76 and 78A to 78E.

Insulator 98A, shown in plan view in Fig. 3, is representative of the other insulators 98B to 98F and it has a circular shape provided with a central circular opening 104 and a pattern of secondary openings having circular shapes 106 and somewhat elongate banana shapes 108. The openings 106 and 108 allow for cryogenic liquid 16 flow from one side of the various insulators to the other side.

Fig. 4 shows an enlarged cross-section of a representative insulator 98E having an outer circumference provided with opposed annular channels 110 and 112 and an intermediate annular protrusion 114. A cylindrical outer face of protrusion 114 contacts conductor 76 while the inner portion of insulator channel 110 provides a seat that receives one of the annular edges of conductor band 78D and insulator channel 112 provides a seat that receives an adjacent one of the annular edges of conductor band 78E.

As further shown in Figs. 2 and 5, the inner annular circumferential portion of insulator 98A surrounding central circular opening 104 has a T-shaped cross-section aligned normal to the axis of container 10 to provide opposed inner ledges 116 and 118. Ledge 116 receives one end of a coil spring 120 seated therein and biasing between insulator 98A and the annular ledge formed by the outer junction between web portion 52B and ring portion 52C of stand-off 52.

The opposite ledge 118 of insulator 98A serves as a seat for an annular rim 122 formed at the first end of female spacer 100A received in central opening 104 of insulator 98A. The first end of spacer 100A further includes an annular extending tab 124 that hooks over and around the first ledge 116 of insulator 98A adjacent to coil spring 120. That way, annular rim 122 in conjunction with tab 124 contacting the opposed ledges 116 and 118 lock insulator 98A to spacer 100A. While it is not shown in enlarged detail in Fig. 2, the opposed end of spacer 100A is received in a central opening in second insulator 98B and has a similar rim and tab structure that together lock spacer 100A to insulator 98B in a similar manner as spacer 100A is locked to insulator 98A. From Fig. 2, it can further be seen that the opposed ends of the second female spacer 100B similarly lock to insulators 100C and 100D, and that the opposed ends of the third female spacer 100C similarly lock to insulators 98E (Fig. 4) and 98F.

First spacer 100A is further provided with a central passage 126 (Fig. 2 and 5) extending along and around the longitudinal axis of container 10 between opposed open ends provided adjacent to and between the first and second insulators 98A and 98B. Two pairs of opposed U-shaped openings 128 extend from each open end thereof towards the middle portion of spacer 100A. Openings 128 communicate with passage 126 centrally located through spacer 100A to provide for flow of cryogenic liquid 16 into and through spacer 100A. As further shown in Fig. 5, a portion of the low thermal conductivity sleeve 56 fitted around the outside wall of a portion of conduit 50 is itself fitted inside the inner wall of spacer 100A such that conduit 50 is positioned inside passage 126 and in coaxial alignment therewith. That way, cryogenic liquid 16 contained inside inner shell 14 is able to flow through the U-shaped openings 128 in spacer 100A in communication with passage 126 and into opening 58 in conduit 50 during filling of Dewar container 10 with cryogenic liquid 16, as previously discussed.

Second insulator 98B is further provided with an outer annular circumference having opposed annular channels 110, 112 similar to channels 110 and 112 of first insulator 98A. The opposed annular channels 110, 112 of insulator 98B receive the adjacent annular edges of first and second conductor bands 78A and 78B, respectively. Thus, first conductor band 78A is held in its proximately spaced and parallel relationship with respect to conductor 76 seated in the annular channels 112 and 110 of respective first and second insulators 98A and 98B while insulators 98A and 98B are in turn secured in place by their locking engagement with the opposed ends of spacer 100A.

Male spacer 102A is shown in Fig. 2 having its opposed ends fitted inside female spacers 100A and 100B and male spacer 102B has its opposed ends fitted inside female spacers 100B and 100C. A portion of representative male spacer 102B is shown in enlarged detail in Fig. 4. Male spacer 102B has a generally cylindrical shape provided with two pairs of opposed U-shaped openings 130 that extend from each open end thereof towards the middle portion of spacer 102B and which are in fluid flow communication with a central passage 132 therethrough. A plurality of axial slots 134 are provided at each end of the male spacers 102A and 102B (only one slot 134 is shown in male spacer 102B in Fig. 4). Slots 134 enable the spacers 102A and 102B to flex adjacent to the slots 134 to thereby provide a snug fit when male spacers 102A and 102B are mated to their respective female spacers 100A to 100C. The central longitudinal passages 126 of the female spacers 100A to 100C are thereby in continuous communication with the central passages 132 of the male spacers 102A and 102B to provide for continuous and uninterrupted fluid flow through the network of male and female spacers. The U-shaped openings 128 in the female spacers and the U-shaped openings 130 in the male spacers thereby provide for fluid flow into and out of the central passages to communicate with the inner enclosure of the inner shell 14. Finally, the openings 106 and 108 in the spaces 102A to 102F provide for fluid flow from one side of the spacer to the other.

A second stand-off 136 is mounted on the inside of dome 14C of the inner shell 14, coaxially around the longitudinal axis of container 10. Stand-off 136 is provided with a pair of diametrically opposed openings 138 (only one shown) having a generally square shape that provide for fluid flow into and out of the enclosure of the stand-off. Stand-off 136 further supports one end of a coil spring 140 which biases between insulator 140F and second stand-off 136 in a similar manner as spring 120 biases between stand-off 52 and insulator 98A. Biasing springs 120 and 140 in conjunction with stand-offs 52 and 136 thus help to support the plurality of conductor bands 78A to 78E comprising the second conductor means in coaxial alignment with large cylindrical conductor 76 independent of the spatial orientation of container 10. Springs 120 and 140 also serve as dampers to absorb axial shock forces that may be imparted to container 10 and to maintain the conductors 76 and 78A to 78E in axial alignment with respect to each other and with respect to the side wall 14A during a disturbance caused by shock forces.

Thus, it is apparent from Figs. 2 to 5, that the liquid quantity sensor of the present invention comprises separate and distinct conductor bands 78A to 78E locked in their parallel and coaxial alignment with respect to each other by the interconnecting network of spacers 100A to 100C and 102A and 102B, and associated insulators 98A to 98F and locked in their proximately spaced and parallel relationships with respect to conductor 106 by opposite facing annular channels 110 and 112 of two consecutive insulators supported by the interconnected male and female spacers. Conductor 76 is in turn held in position by the respective protrusions 114 extending radially outwardly at intermediate positions between the opposed outer steps of the spacers. This entire construction is then locked in the position shown in Fig. 2 by the bias applied to stand-offs 52 and 136 and associated insulators 98A and 98F by springs 54 and 140 to thereby provide a capacitor means that is useful for detecting the quantity of the cryogenic fluid 16 inside inner shell 14.

In Use

Dewar container 10 is intended for use by people needing to breath in a hostile environment where the atmosphere is not conducive to supporting life. In that respect, a user will first don the facepiece 24 (shown in block representation in Fig. 1) while the container 10 is carried on the back by a harness, as is well known to those of ordinary skill in the art. Inner shell 14 has previously been filled with cryogenic liquid 16. Valve 32 is then turned to an open position permitting flow through the system. The cryogenic liquid 16 flows from the inner shell 14 via conduits 26 and 34 to the first endothermic heat exchanger 62 which adds heat energy to the cryogenic liquid 16 to provide for initial vaporizing and then warming of the liquid 16. The raised-energy fluid leaving the first endothermic heat exchanger 66 is then in a gaseous state near ambient temperature, the actual gas temperature dependent on the flow rate through the heat exchanger 62. This gas then moves through the internal exothermic heat exchanger 66 mounted inside the inner shell 14 where thermal energy input into the raised-energy fluid is conducted to the cryogenic liquid 16 still inside the inner shell 14. This adds heat energy to the cryogenic liquid 16, and causes some of the cryogenic liquid to boil and thereby maintain a pressure head inside the inner shell 14 while simultaneously causing the temperature of the gas flowing through the exothermic heat exchanger 66 to cool. The cooled gas in the exothermic heat exchanger 66 is then moved to the second endothermic heat exchanger 70 where heat energy is again conducted from the ambient surroundings to warm the gas to about ambient temperature before the gas is delivered to the facepiece 22 as a breathable air mixture.

Preferably, heat exchanger 66 is disposed inside the inner shell 14 such that some portion of heat exchanger 66 is at least partially immersed in the cryogenic liquid 16 independent of the spatial orientation of the container 10 to provide a breathing apparatus that is operable in any spatial orientation. For a more detailed description of the spatial independent vaporization function of Dewar container 10, reference is made to U.S. Patent No. 5,357,758 to Andonian, the disclosure of which is incorporated herein by references.

The liquid quantity sensor of the present invention is provided inside the inner shell 14 to continuously monitor the liquid quantity of cryogenic liquid 16 remaining inside the Dewar container 10. This is derived by using a mathematical model of the geometry of the sensor configuration as previously described, i.e., the configuration of conductor 76 and conductor bands 78A to 78E in relation to the shape and volume of inner shell 14. From the capacitance measurements $C_1$ to $C_5$ of each "zone" of conductor 76 covered by bands 78A to 78E, the fractional coverage of each zone can be predicted for any quantity of liquid 16 and at any orientation angle of Dewar container 10. The computer 86 does this by scaling the raw capacitance measurement $C_1$ to $C_5$ for each zone to create an uncovered value as zero and a fully covered value as one. Computer 86 takes this data, computes an average percentage fill of Dewar container 10 and then selects the nearest percent from a fill table stored in a database input in the computer memory for a wide range of fill quantities and inclination angles to thereby produce a best fit for one fill value at a specific angle of inclination. This process is periodically repeated to thereby determine a change in liquid quantity from a first measurement event to a second measurement event and to determine a change in inclination of the Dewar container 10 with respect to the two measurement events.

As further shown in the block diagram in Fig. 6, the micro-processor 86 sends the calculated cryogenic fluid level reading to a monitor (not shown) that is provided with a display such as, for example, the bar graph 142 for visually outputting the quantity of cryogenic liquid 16 remaining in Dewar container 10. It should be understood that the output of display 142 can be in many forms such as LED's or numeric read-out, and that the bar graph shown is only representative. The Dewar container 10 monitor is also provided with an alarm 144 that emits a detectable signal such as a pneumatic tactical or an audible form, at such time as the supply of cryogenic liquid 16 has been depleted to about 25 percent of total capacity. Electrical power is provided to the sensor means by a battery 146 connected to a battery test circuit, indicated as block 148 tied in with computer 86 which regulates the distribution of power to the sensor means via a power transmission cable 150 tied to multiplexer 88, A/D converter 90 and in turn micro-processor 86. A battery low power alarm 152 is provided to signal when the energy left in battery 146 is depleted to a predetermined level. The predetermined level would be established to ensure a residual battery energy capacity to allow sufficient time for egress of the respirator user from a hazardous environment. The trigger level therefore would be set at a battery energy capacity equivalent to one or more hours of continuous operation (in alarm mode).

An associated motion sensor mechanism, indicated as block 154, can be provided that senses a lack of motion of the Dewar container 10 to trigger the alarm 144. In this case, the alarm 144 will emit a detectable signal, preferably different than that which is emitted to indicate a low cryogenic liquid situation, to provide a personal alarm system (PAS). For example, if a user of the present apparatus has been incapacitated due to injury and the like and has not moved for some period of time, for example twenty seconds, motion sensor 154 triggers alarm 144 to send out a mandown alarm signal.

In accordance with the present invention, the measured capacitances $C_1$ to $C_5$ for the five capacitors (conductor bands 78A to 78E) are compared to a set of reference capacitance values stored in a database of micro-processor 86 or other suitable computer for the container 10 at various volume percentages (percent fills) and spatial orientations to select a volume percentage as well as a spatial orientation which is a "best fit" to the set of measured capacitances $C_1$ to $C_5$. As seen in Fig. 2, the capacitors 78A to 78E divide the length of the container 10 into zones, there being five generally equal zones for the five capacitors. Although capacitors are provided to determine a percentage of contact of the liquid with each zone in accordance with a preferred embodiment of the present invention, it should be understood that the percentage of contact of the liquid with each zone may be determined in other ways or by other means which are meant to come within the scope of the present invention. By "best fit" is meant a volume percentage and/or spatial orientation which has a set of reference capacitance values or reference percentage of contact values which, of all of the sets of reference values in the database, approximate most closely the set of measured capacitances or measured percentages of contact. A closer "best fit" may be obtained by computing a weighted average and/or interpolation as discussed hereinafter. It should also be understood that, with the dimensions of the container known, the percentage volume and spatial orientation may be determined by ways other than comparing with the reference sets of values. For example, if a large number of point capacitors are provided to blanket the inside wall of a container, the percentage volume and spatial orientation may be calculated based on information as to which point zones are contacted by the liquid.

Each volume percentage and spatial orientation has a set of values of percentage of contact of the liquid with each zone (scaled capacitance value for each capacitor) wherein a fully covered zone has a value of "one" and an uncovered zone has a value of "zero". Each percentage of contact value after normalization is a fractional number, i. e., between zero and one. These reference values can be determined mathematically if the geometry of the container is known or by observing the percentages of contact when the container 10 or similar container having the same dimensions is subjected to each combination of volume percentage and spatial orientation. These reference values can be obtained for providing in the database utilizing principles commonly known to those of ordinary skill in the art to which this invention pertains.

An example of the mathematical equations used to compute cylinder volume and contact surface areas of capacitance elements at various angles and fill volumes is appended to this specification. As indicated on page 1A of the Appendix, the exemplary analysis is for a cylinder of certain specified dimensions, having 5 capacitor segments, and being 25 percent filled and having an inclination of 30 degrees. On page 2A, the total cylinder surface area and volume and filled cylinder volume are calculated. Continuing on in the Appendix, pages 3A through 6A thereof deal with determining which of four conditions of coverage exists for each zone of the capacitive sensor elements. The four cases are:

a. One end partially submerged, other end not submerged

b. One end fully submerged, other end not submerged

c. One end fully submerged, other end partially submerged

d. Both ends partially submerged

When the appropriate condition of each zone is determined, a surface area covered calculation is performed for each zone as provided on pages 7A through 12A. These calculations take into account the percent fill and orientation of the zonal sensor array. Page 13A collects the results and relates the calculations to actual area covered in each zone, and page 14A provides a summary of normalized area coverage for each capacitive zone in an array format. These are the reference values which are loaded into the following 12 reference tables and these calculations are repeated for each percent fill for each angle of orientation.

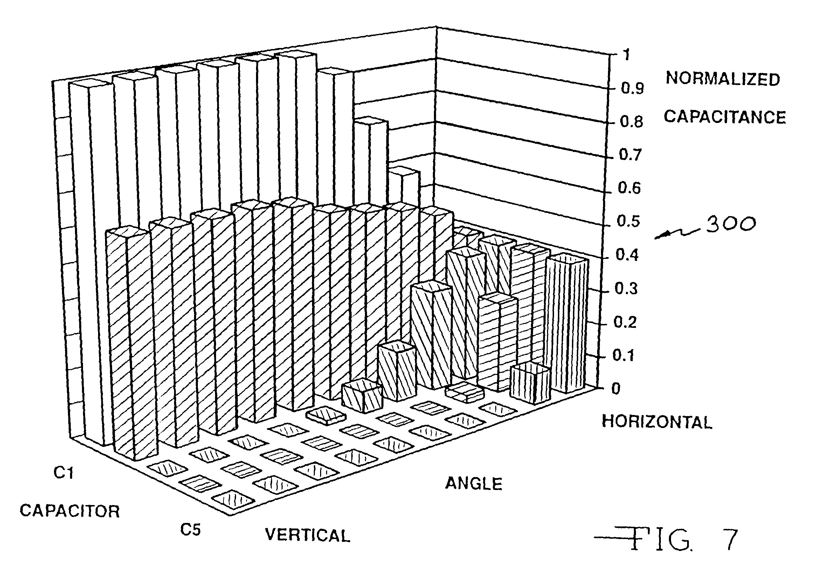

The following 12 tables constitute an example of a series of sets of the reference capacitance values (scaled between zero and one) for each 10 degrees of container orientation (theta), 0 degrees being horizontal and 90 degrees being vertical, for percent fills of 10, 20, 25, 27.5, 30, 35, 40, 50, 60, 70, 80, and 90 percent. The five capacitors are labeled C1, C2, C3, C4, and C5. The "Average" column contains the average of the five reference capacitance values at each theta and percent fill and is usable as discussed hereinafter. The values in the 25 percent fill table for 30 degree inclination are the values derived in the example contained in the Appendix. Fig. 7 shows at 300 a graphical representation of the data in the 35 percent fill table, showing the variation in coverage for each zonal capacitor as the container orientation changes from vertical to horizontal.

| Theta | %Fill | C1 | C2 | C3 | C4 | C5 | Average | Sq. Error |
|---|---|---|---|---|---|---|---|---|
| 0 | 10 | 0.146 | 0.146 | 0.146 | 0.146 | 0.146 | 0.15 | 1.21 |
| 10 | | 0.331 | 0.197 | 0.009 | 0 | 0 | 0.11 | 1.68 |
| 20 | | 0.362 | 0.072 | 0 | 0 | 0 | 0.09 | 1.66 |
| 30 | | 0.352 | 0.008 | 0 | 0 | 0 | 0.07 | 1.56 |
| 40 | | 0.3 | 0 | 0 | 0 | 0 | 0.06 | 1.45 |
| 50 | | 0.247 | 0 | 0 | 0 | 0 | 0.05 | 1.36 |
| 60 | | 0.203 | 0 | 0 | 0 | 0 | 0.04 | 1.29 |
| 70 | | 0.171 | 0 | 0 | 0 | 0 | 0.03 | 1.24 |
| 80 | | 0.164 | 0 | 0 | 0 | 0 | 0.03 | 1.23 |
| 90 | | 0.164 | 0 | 0 | 0 | 0 | 0.03 | 1.23 |

| Theta | %Fill | C1 | C2 | C3 | C4 | C5 | Average | Sq. Error |
|---|---|---|---|---|---|---|---|---|
| 0 | 20 | 0.278 | 0.278 | 0.278 | 0.278 | 0.278 | 0.28 | 1.25 |
| 10 | | 0.456 | 0.355 | 0.232 | 0.037 | 0 | 0.22 | 1.92 |
| 20 | | 0.535 | 0.323 | 0.036 | 0 | 0 | 0.18 | 2.58 |
| 30 | | 0.582 | 0.206 | 0 | 0 | 0 | 0.16 | 2.81 |
| 40 | | 0.637 | 0.111 | 0 | 0 | 0 | 0.15 | 2.86 |
| 50 | | 0.696 | 0.052 | 0 | 0 | 0 | 0.15 | 2.89 |
| 60 | | 0.735 | 0.013 | 0 | 0 | 0 | 0.15 | 2.81 |
| 70 | | 0.748 | 0 | 0 | 0 | 0 | 0.15 | 2.78 |
| 80 | | 0.748 | 0 | 0 | 0 | 0 | 0.15 | 2.78 |
| 90 | | 0.748 | 0 | 0 | 0 | 0 | 0.15 | 2.78 |

| Theta | %Fill | C1 | C2 | C3 | C4 | C5 | Average | Sq. Error |
|---|---|---|---|---|---|---|---|---|
| 0 | 25 | 0.323 | 0.323 | 0.323 | 0.323 | 0.323 | 0.32 | 1.23 |
| 10 | | 0.503 | 0.405 | 0.296 | 0.131 | 0 | 0.27 | 1.86 |
| 20 | | 0.605 | 0.4 | 0.118 | 0 | 0 | 0.22 | 2.84 |
| 30 | | 0.697 | 0.339 | 0.004 | 0 | 0 | 0.21 | 4.24 |
| 40 | | 0.797 | 0.243 | 0 | 0 | 0 | 0.21 | 6.15 |
| 50 | | 0.863 | 0.177 | 0 | 0 | 0 | 0.21 | 5.88 |
| 60 | | 0.912 | 0.128 | 0 | 0 | 0 | 0.21 | 4.88 |
| 70 | | 0.951 | 0.089 | 0 | 0 | 0 | 0.21 | 4.10 |
| 80 | | 0.985 | 0.055 | 0 | 0 | 0 | 0.21 | 3.55 |
| 90 | | 1 | 0.04 | 0 | 0 | 0 | 0.21 | 3.34 |

| Theta | %Fall | C1 | C2 | C3 | C4 | C5 | Average | Sq. Error |
|---|---|---|---|---|---|---|---|---|
| 0 | 27.5 | 0.344 | 0.344 | 0.344 | 0.344 | 0.344 | 0.34 | 1.21 |
| 10 | | 0.524 | 0.427 | 0.323 | 0.183 | 0.003 | 0.29 | 1.80 |
| 20 | | 0.64 | 0.433 | 0.168 | 0 | 0 | 0.25 | 2.82 |
| 30 | | 0.765 | 0.394 | 0.027 | 0 | 0 | 0.24 | 5.08 |
| 40 | | 0.863 | 0.323 | 0 | 0 | 0 | 0.24 | 9.02 |
| 50 | | 0.925 | 0.261 | 0 | 0 | 0 | 0.24 | 8.98 |
| 60 | | 0.969 | 0.217 | 0 | 0 | 0 | 0.24 | 6.77 |
| 70 | | 0.997 | 0.189 | 0 | 0 | 0 | 0.24 | 5.60 |
| 80 | | 1 | 0.186 | 0 | 0 | 0 | 0.24 | 5.50 |
| 90 | | 1 | 0.186 | 0 | 0 | 0 | 0.24 | 5.50 |

| Theta | %Fall | C1 | C2 | C3 | C4 | C5 | Average | Sq. Error |
|---|---|---|---|---|---|---|---|---|
| 0 | 30 | 0.363 | 0.363 | 0.363 | 0.363 | 0.363 | 0.36 | 1.19 |

(continued)

| Theta | %Fall | C1 | C2 | C3 | C4 | C5 | Average | Sq. Error |
|---|---|---|---|---|---|---|---|---|
| 10 | | 0.545 | 0.448 | 0.346 | 0.22 | 0.025 | 0.32 | 1.74 |
| 20 | | 0.676 | 0.465 | 0.221 | 0 | 0 | 0.27 | 2.70 |
| 30 | | 0.826 | 0.445 | 0.062 | 0 | 0 | 0.27 | 5.02 |
| 40 | | 0.918 | 0.412 | 0.002 | 0 | 0 | 0.27 | 6.88 |
| 50 | | 0.972 | 0.36 | 0 | 0 | 0 | 0.27 | 7.69 |
| 60 | | 1 | 0.332 | 0 | 0 | 0 | 0.27 | 7.24 |
| 70 | | 1 | 0.332 | 0 | 0 | 0 | 0.27 | 7.24 |
| 80 | | 1 | 0.332 | 0 | 0 | 0 | 0.27 | 7.24 |
| 90 | | 1 | 0.332 | 0 | 0 | 0 | 0.27 | 7.24 |

| Theta | %Fill | C1 | C2 | C3 | C4 | C5 | Average | Sq. Error |
|---|---|---|---|---|---|---|---|---|
| 0 | 35 | 0.4 | 0.4 | 0.4 | 0.4 | 0.4 | 0.40 | 1.15 |
| 10 | | 0.585 | 0.487 | 0.389 | 0.276 | 0.095 | 0.37 | 1.62 |
| 20 | | 0.761 | 0.525 | 0.311 | 0.027 | 0 | 0.32 | 2.38 |
| 30 | | 0.926 | 0.541 | 0.157 | 0 | 0 | 0.32 | 3.34 |
| 40 | | 0.993 | 0.564 | 0.067 | 0 | 0 | 0.32 | 3.38 |
| 50 | | 1 | 0.607 | 0.017 | 0 | 0 | 0.32 | 3.03 |
| 60 | | 1 | 0.624 | 0 | 0 | 0 | 0.32 | 2.90 |
| 70 | | 1 | 0.624 | 0 | 0 | 0 | 0.32 | 2.90 |
| 80 | | 1 | 0.624 | 0 | 0 | 0 | 0.32 | 2.90 |
| 90 | | 1 | 0.624 | 0 | 0 | 0 | 0.32 | 2.90 |

| Theta | %Fall | C1 | C2 | C3 | C4 | C5 | Average | Sq. Error |
|---|---|---|---|---|---|---|---|---|
| 0 | 40 | 0.434 | 0.434 | 0.434 | 0.434 | 0.434 | 0.43 | 1.11 |
| 10 | | 0.624 | 0.524 | 0.428 | 0.323 | 0.183 | 0.42 | 1.48 |
| 20 | | 0.86 | 0.585 | 0.379 | 0.092 | 0 | 0.38 | 2.03 |
| 30 | | 0.991 | 0.643 | 0.282 | 0 | 0 | 0.38 | 2.19 |
| 40 | | 1 | 0734 | 0.182 | 0 | 0 | 0.38 | 2.07 |
| 50 | | 1 | 0.799 | 0.117 | 0 | 0 | 0.38 | 1.91 |
| 60 | | 1 | 0.847 | 0.069 | 0 | 0 | 0.38 | 1.78 |
| 70 | | 1 | 0.885 | 0.031 | 0 | 0 | 0.38 | 1.68 |
| 80 | | 1 | 0.913 | 0003 | 0 | 0 | 0.38 | 1.61 |
| 90 | | 1 | 0.916 | 0 | 0 | 0 | 0.38 | 1.61 |

| Theta | %Fill | C1 | C2 | C3 | C4 | C5 | Average | Sq. Error |
|---|---|---|---|---|---|---|---|---|
| 0 | 50 | 0.5 | 0.5 | 0.5 | 0.5 | 0.5 | 0.50 | 1.02 |
| 10 | | 0.707 | 0.598 | 0.5 | 0.402 | 0.293 | 0.50 | 1.26 |

(continued)

| Theta | %Fill | C1 | C2 | C3 | C4 | C5 | Average | Sq. Error |
|---|---|---|---|---|---|---|---|---|
| 20 | | 0.991 | 0.721 | 0.5 | 0.279 | 0.009 | 0.50 | 1.39 |
| 30 | | 1 | 0.887 | 0.5 | 0.113 | 0 | 0.50 | 1.27 |
| 40 | | 1 | 0.968 | 0.5 | 0.032 | 0 | 0.50 | 1.19 |
| 50 | | 1 | 1 | 0.5 | 0 | 0 | 0.50 | 1.16 |
| 60 | | 1 | 1 | 0.5 | 0 | 0 | 0.50 | 1.16 |
| 70 | | 1 | 1 | 0.5 | 0 | 0 | 0.50 | 1.16 |
| 80 | | 1 | 1 | 0.5 | 0 | 0 | 0.50 | 1.16 |
| 90 | | 1 | 1 | 0.5 | 0 | 0 | 0.50 | 1.16 |

| Theta | %Fill | C1 | C2 | C3 | C4 | C5 | Average | Sq. Error |
|---|---|---|---|---|---|---|---|---|
| 0 | 60 | 0.566 | 0.566 | 0.566 | 0.566 | 0.566 | 0.57 | 0.93 |
| 10 | | 0.817 | 0.677 | 0.572 | 0.476 | 0.376 | 0.58 | 1.08 |
| 20 | | 1 | 0.908 | 0.621 | 0.415 | 0.14 | 0.62 | 1.02 |
| 30 | | 1 | 1 | 0.718 | 0.357 | 0.009 | 0.62 | 0.94 |
| 40 | | 1 | 1 | 0.818 | 0.266 | 0 | 0.62 | 0.90 |
| 50 | | 1 | 1 | 0.883 | 0.201 | 0 | 0.62 | 0.87 |
| 60 | | 1 | 1 | 0.931 | 0.153 | 0 | 0.62 | 0.85 |
| 70 | | 1 | 1 | 0.969 | 0.115 | 0 | 0.62 | 0.83 |
| 80 | | 1 | 1 | 0.997 | 0.087 | 0 | 0.62 | 0.82 |
| 90 | | 1 | 1 | 1 | 0.084 | 0 | 0.62 | 0.81 |

| Theta | %Fill | C1 | C2 | C3 | C4 | C5 | Average | Sq. Error |
|---|---|---|---|---|---|---|---|---|
| 0 | 70 | 0.637 | 0.637 | 0.637 | 0.637 | 0.637 | 0.64 | 0.84 |
| 10 | | 0.975 | 0.78 | 0.654 | 0.552 | 0.455 | 0.68 | 0.92 |
| 20 | | 1 | 1 | 0.779 | 0.535 | 0.320 | 0.73 | 0.82 |
| 30 | | 1 | 1 | 0.938 | 0.555 | 0.174 | 0.73 | 0.76 |
| 40 | | 1 | 1 | 0.998 | 0.588 | 0.082 | 0.73 | 0.74 |
| 50 | | 1 | 1 | 1 | 0.64 | 0.028 | 0.73 | 0.72 |
| 60 | | 1 | 1 | 1 | 0.668 | 0 | 0.73 | 0.72 |
| 70 | | 1 | 1 | 1 | 0.668 | 0 | 0.73 | 0.72 |
| 80 | | 1 | 1 | 1 | 0.688 | 0 | 0.73 | 0.72 |
| 90 | | 1 | 1 | 1 | 0.688 | 0 | 0.73 | 0.72 |

| Theta | %Fill | C1 | C2 | C3 | C4 | C5 | Average | Sq. Error |
|---|---|---|---|---|---|---|---|---|
| 0 | 80 | 0.722 | 0.722 | 0.722 | 0.722 | 0.722 | 0.72 | 0.75 |
| 10 | | 1 | 0.963 | 0.768 | 0.645 | 0.544 | 0.78 | 0.76 |
| 20 | | 1 | 1 | 0.964 | 0.677 | 0.465 | 0.82 | 0.69 |

(continued)

| Theta | %Fill | C1 | C2 | C3 | C4 | C5 | Average | Sq. Error |
|-------|-------|----|----|----|------|------|---------|-----------|
| 30 | | 1 | 1 | 1 | 0.794 | 0.418 | 0.84 | 0.66 |
| 40 | | 1 | 1 | 1 | 0.889 | 0.363 | 0.85 | 0.64 |
| 50 | | 1 | 1 | 1 | 0.948 | 0.304 | 0.85 | 0.63 |
| 60 | | 1 | 1 | 1 | 0.987 | 0.265 | 0.85 | 0.63 |
| 70 | | 1 | 1 | 1 | 1 | 0.252 | 0.85 | 0.62 |
| 80 | | 1 | 1 | 1 | 1 | 0.252 | 0.85 | 0.62 |
| 90 | | 1 | 1 | 1 | 1 | 0.252 | 0.85 | 0.62 |

| Theta | %Fill | C1 | C2 | C3 | C4 | C5 | Average | Sq. Error |
|-------|-------|-------|-------|-------|-------|-------|---------|-----------|
| 0 | 90 | 0.854 | 0.854 | 0.854 | 0.854 | 0.854 | 0.85 | 0.63 |
| 10 | | 1 | 1 | 0.991 | 0.803 | 0.669 | 0.89 | 0.62 |
| 20 | | 1 | 1 | 1 | 0.928 | 0.638 | 0.91 | 0.60 |
| 30 | | 1 | 1 | 1 | 0.992 | 0.648 | 0.93 | 0.59 |
| 40 | | 1 | 1 | 1 | 1 | 0.7 | 0.94 | 0.58 |
| 50 | | 1 | 1 | 1 | 1 | 0.753 | 0.95 | 0.57 |
| 60 | | 1 | 1 | 1 | 1 | 0.797 | 0.96 | 0.56 |
| 70 | | 1 | 1 | 1 | 1 | 0.829 | 0.97 | 0.56 |
| 80 | | 1 | 1 | 1 | 1 | 0.836 | 0.97 | 0.56 |
| 90 | | 1 | 1 | 1 | 1 | 0.836 | 0.97 | 0.56 |

As discussed more fully hereinafter, the numbers in the "Square Error" columns in the above tables relate the following exemplary measured set of reference capacitance values (scaled between zero and one) to the respective set of reference capacitance values at each theta and percent fill.

$C1 = 0.908$
$C2 = 0.307$
$C3 = 0$
$C4 = 0$
$C5 = 0$

A "measured" set of values refers to the measured capacitances or percentages of contact of the zones at a particular fill and spatial orientation which the previously derived or obtained "reference" values thereof contained in the tables are used to determine.

An examination of the tables will reveal that each volume percentage and spatial orientation has a unique set of capacitances or coverage values relative to other volume percentages, i.e., different from each of the sets in the tables for other volume percentages. In addition to the cylindrical configuration, other geometric configurations may also provide such unique sets of values. Thus, by determining a set of capacitance values in the reference database for a container which most closely approximates a set of measured values so as to be a "best fit", one may be assured of having correctly approximated the percentage volume of liquid in the container. While the spatial orientation may also be approximated from the measured values when compared to the reference values in the database, the accuracy of predicting the spatial orientation may be less at some ranges of fill level. For example, for the 35 percent fill table shown above, the same set of reference values applies to spatial orientations between 60 and 90 degrees. However, closer approximations of spatial orientations as well as percentage volumes may be obtained as the number of zones (capacitors) is increased.

It may be desired that an alarm be set to sound when the volume reaches a certain percentage such as 27.5 percent.

It should be noted that there may be some spacing axially between the capacitors. In order to provide improved accuracy in the neighborhood of the percentage volume at the alarm point or other critical point, the number of capacitors is preferably selected so that this percentage volume is well within the range of one of the zones. Thus, for the embodiment shown in the drawings, one of the 5 capacitors would generally cover a zone of 20 to 40 percent fill when the container is vertical, and the percentage fill (27.5 percent) at which the alarm is set to sound is well within this range. For the same reasons, it should be noted that a greater number of tables of reference values are closely distributed around the 27.5 percent range at which an alarm is to sound and below which it may be considered important that the percentage volume not be substantially reduced. The number of reference data sets around the alarm point is increased, such as by providing data sets at 22.5, 25, 27.5, and 30 percents for a 27.5 percent alarm point, to also improve accuracy.

For the case of cryogenic liquids, such as a liquid mixture of oxygen and nitrogen, it is considered important, as previously discussed, to provide for temperature measurements and measurements of the oxygen/nitrogen mix and the like to correct for the dependence of the dielectric coefficient on temperature, oxygen/nitrogen mix, and any other variables to be desirably corrected for improved accuracy in accordance with principles commonly known in the art to which this invention pertains.

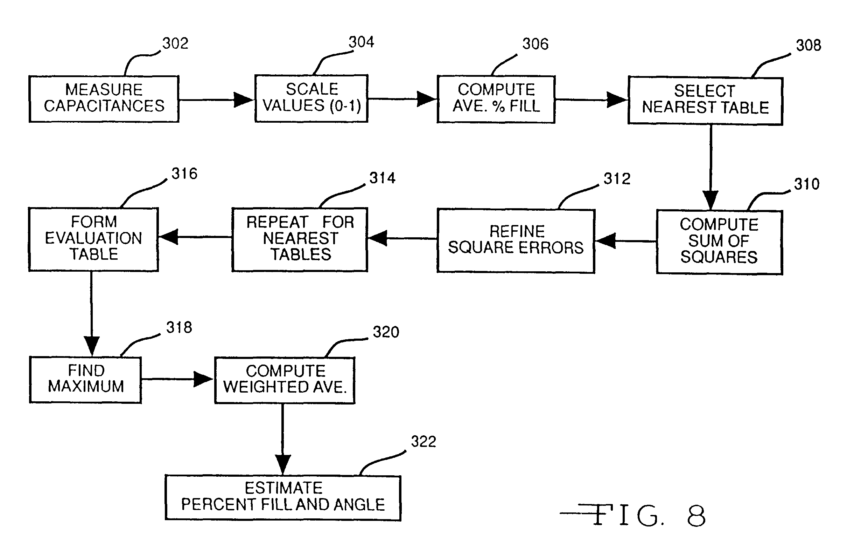

Referring to Fig. 8, there is shown a flow diagram of a preferred process of utilizing the measured capacitances or percentages of contact, indicated at 302, to estimate the percentage fill or volume and the angle of spatial orientation, indicated at 322. As previously discussed and as indicated at 304, the measured values are first scaled between zero and one.

Since the portable container 10 may be carried, for example, by a fire fighter and may therefore be self-contained, the capacity of the small micro-processor 86 for performing the calculations may be limited. It may therefore be a strain on the micro-processor 86 to perform the computations described hereinafter for all of the percent fills between 0 and 100 percent. In order to reduce the number of percent fills on which computations must be performed, in accordance with a preferred embodiment of the present invention, an average percent fill is computed, as indicated at 306, and the computations hereinafter described are performed only on the percent fill table nearest to the computed average percent fill and on the percent fill tables, perhaps two higher and two lower, nearest thereto, as indicated at 308 and 314 respectively. The number of percent fill tables on which the computations are performed may of course be increased or decreased as considered necessary to improve accuracy of data interpolation or to decrease required micro-processor capacity.

The average percent fill is computed by adding the scaled measured values and dividing the sum by the number of measured values, i.e., the number of zones. Thus, for example, if the average of the scaled measured values is 0.63 representing a 63 percent fill, then the nearest of the above tables is the 60 percent fill table and two tables on either side thereof include the 40, 50, 70, and 80 percent fill tables. These would be the tables on which the hereinafter described computations would be performed thereby allowing the required micro-processor capacity to be reduced, and the computations would not be performed on the remaining tables. With a rough estimate for percent fill of 63 percent fill, through the mathematical modeling it can be concluded that the actual percent fill would be somewhere between 40 and 80 percent.

For another example, the average percent fill for the five measured capacitance values for which the square error in the above tables is computed may be calculated to be $(0.908+0.307+0+0+0) \div 5 = 0.24$ which indicates the percent fill to be around 24 percent, i.e., between 10 and 40 percent. However, if desired, the step of computing the average percent fill could be eliminated and the hereinafter described computations performed on all of the percent fill tables.

To obtain a comparative number which represents the relative degree of closeness or similarity between the measured set of values and one of the reference sets of values for the range of percent fills identified (i.e., 40 to 80 percent for the 63 percent average fill example or 10 to 40 percent for the 24 percent average fill example) and various spatial orientations or angles of inclination and which can be compared in size to other such comparative numbers obtained, the sum of the squares of the differences (error) between the reference zonal values and the corresponding measured values is computed, as illustrated at 310. Such a comparative number is obtained for each angle in each percent fill table for which the computations are to be performed. This provides a sensitive method of comparing the measured and reference data.

Since it is the relative values of the comparative numbers that are to be used in the further computations, these comparative numbers or square errors may be acted on mathematically as long as the relativeness of the values remain unaltered. In order to refine these square error numbers to prevent possible divide by zero errors as well as to increase contrast, a small constant is added to the sum of the squares and the resultant sum is then divided into another constant such as, for example, one, and the square root taken, as indicated at 312, and all of the resulting comparative numbers then compared by the micro-processor 86 or entered into an evaluation table or tables for comparison, as indicated at 316. It is these refined square error numbers that are contained in the tables. For example, for an angle of inclination of 0 degrees and a percent fill of 10 percent and for the exemplary capacitance values from which the square errors for the above tables was attained, the sum of the squares of the differences between the reference zonal values and the corresponding measured values is computed as $(.908-.146)^2 + (.307-.146)^2 + (.146-0)^2 + (.146-0)^2 + (.146-0)^2$ which equals .581+.026+.021+.021+.021 which equals 0.670. Adding a small constant such as 0.01 and dividing the sum into 1 and taking the square root results in the relative number 1.21 (square error), which is shown in the last column of the 10 percent fill table at the 0 degree inclination angle. It should be understood that the sum of the squares may be acted on mathematically in suitable alternative ways as long as the relativeness of the values remains unchanged.

The following is an illustration of the best fit evaluation table wherein the comparative square error numbers are entered for seven fill percentages between 10 and 40 percent and for every 10 degrees of container inclination between horizontal (0 degrees) and vertical (90 degrees).

## BEST FIT EVALUATION TABLE

| Angle | Percent Fill | | | | | | |
|---|---|---|---|---|---|---|---|
| | 10.00 | 20.00 | 25.00 | 27.50 | 30.00 | 35.00 | 40.00 |
| 0.00 | 1.21 | 1.25 | 1.23 | 1.21 | 1.19 | 1.15 | 1.11 |
| 10.00 | 1.68 | 1.92 | 1.86 | 1.80 | 1.74 | 1.62 | 1.48 |
| 20.00 | 1.66 | 2.58 | 2.84 | 2.82 | 2.70 | 2.38 | 2.03 |
| 30.00 | 1.56 | 2.81 | 4.24 | 5.08 | 5.02 | 3.34 | 2.19 |
| 40.00 | 1.45 | 2.86 | 6.15 | 9.02 | 6.88 | 3.38 | 2.07 |
| 50.00 | 1.36 | 2.89 | 5.88 | 8.98 | 7.69 | 3.03 | 1.91 |
| 60.00 | 1.29 | 2.81 | 4.88 | 6.77 | 7.24 | 2.90 | 1.78 |
| 70.00 | 1.24 | 2.78 | 4.10 | 5.60 | 7.24 | 2.90 | 1.68 |
| 80.00 | 1.23 | 2.78 | 3.55 | 5.50 | 7.24 | 2.90 | 1.61 |
| 90.00 | 1.23 | 2.78 | 3.34 | 5.50 | 7.24 | 2.90 | 1.60 |

Since the comparative numbers in the above best fit table were obtained by dividing into one and taking the square root, the highest comparative numbers represent sets of square error values closest or most similar to the set of measured values. Thus, the evaluation table is reviewed or scanned by the micro-processor 86 to locate the most frequent maximum comparative number, as indicated at 318. In this example, the maximum comparative number is 9.02 which is at 27.5 percent fill and an angle of 40 degrees. Although a more precise best fit may be obtained as described hereinafter, an estimated percent fill of 27.5 percent may be said to be a best fit. If the corresponding comparative numbers for 30 and 50 degrees were substantially less, one may be assured that the spatial orientation is approximately 40 degrees, and this spatial orientation may also be included in the best fit.

If the step of adding a small constant to the sum of the squares and dividing into one and taking the square root is dispensed with, which would reduce accuracy, then the resulting evaluation table should be reviewed to locate the smallest or least comparative number, and this smallest comparative number would in this case represent the set of reference values closest or most similar to the set of measured values.

It should be noted that the next highest maximum comparative number in the above best fit evaluation table of 8.98 occurs at a 50 degree angle and a 27.5 percent fill. This indicates that the percent fill is closer to a 27.5 percent fill. To compute a more precise best fit, the weighted average (based on the comparative values on both corresponding sides of the maxima for the percent fill and for the angle) is computed, as indicated at 320. The weighted average for the percent fill is thus computed by multiplying the table value (square error) by the corresponding percent fill for the nearest table value neighbor or neighbors on each side of the peak value at the particular angle and summing the results. This sum is then divided by the sum of the table value neighbors used to obtain the summed results to give the weighted percent fill. Likewise, the weighted average for the angle is computed by multiplying the table value (square error) by the corresponding angle for the nearest table value neighbor or neighbors on each side of the peak value at the particular percent fill and summing the results. This sum is then divided by the sum of the table value neighbors used to obtain the summed results to give the weighted angle. Therefore, the best fit in this example may more precisely be determined as follows. For the percent fill, wherein the table values are 6.15 and 6.88 at the nearest percent fill neighbors 25 and 30 percent respectively:

$$\frac{25\,(6.15) + 30\,(6.88)}{27.6} = \text{approximately } 6.15 + 6.88 \text{ percent fill}$$

For the angle, wherein the table values are 5.08 and 8.98 at the nearest angle neighbors 30 and 50 degrees respectively:

$$\frac{30\,(5.08) + 50\,(8.98)}{5.08 + 8.98} = \text{approximately } 43 \text{ degrees}$$

Thus, the best fit in this example may be said to be approximately at a 27.6 percent fill and 43 degree spatial orientation. Interpolation by weighted averaging in the region of best fit can provide, as indicated at 322, a robust and accurate estimate of the fill and angle parameters. Thus, building a two-dimensional array of error values allows interpolation and a more robust estimate (best fit) of the percent fill and angle parameters.

Since the average percent fill was computed to be 27.6 percent, this same result would have been obtained if comparative numbers were generated only for the 25, 27.5, and 30 percent fill tables and would have required substantially less micro-processor capacity.

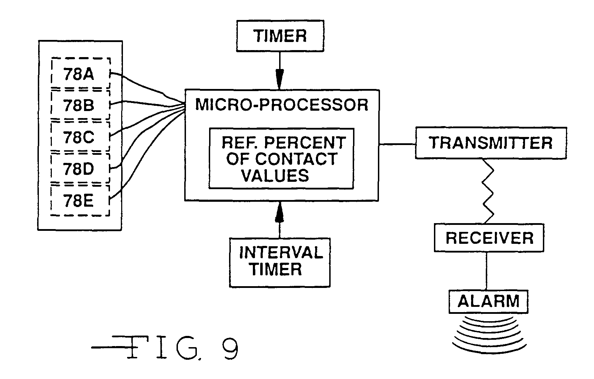

During normal use in fighting fires and the like, the container 10 will assume various inclinations. However, when the user has become incapacitated and is thus "down", the container inclination should normally remain substantially constant although the volume of liquid 16 therein may decline due to continued breathing of the person or its rapid escape from the container if the facepiece 22 is removed. For example, a Dewar container may lose liquid at a rate of as much as perhaps 400 liters per minute if there is a removed mask. In order to detect a substantially constant angle of orientation of the container 10 irregardless of its volume over a predetermined period of time such as perhaps 20 seconds sufficient to conclude that a person is "down," in accordance with the present invention, the reference percentage of contact values are used to determine an approximate angle or angles of inclination of the container 10 for each of a plurality of perhaps 3 or more times during the predetermined period of time. Such a motion sensor mechanism indicative of "man down" may be (but is not required to be) incorporated with the Dewar container 10, utilizing its conductive bands or zones 78A to 78E for monitoring container inclination and thereby sensing lack of motion as well as for sensing the quantity of liquid in the container, as illustrated in Fig. 9. Thus, the measured and suitably processed percentage of contact values from zones 108A to 108E are routed to a motion sensor mechanism, illustrated generally at 400, which includes a micro-processor 402, which may be the same as micro-processor 86 in Fig. 6, which compares these values with the reference sets of values, illustrated at 404, which have been previously inputted therein, to obtain an angle of inclination value.

Motion Sensor 400 also comprises suitable electronic circuitry including a timer 406 for triggering the obtaining of an angle of inclination value at each of specified time intervals, the micro-processor being programmed to compare the angle of inclination values thusly obtained over the predetermined period of time and is further programmed to cause a transmitter 408 to transmit a signal, illustrated at 410, to a receiver 412 for signalling an alarm device 414 to, for example, sound if an angle of inclination value obtained at each time is substantially the same as an angle of inclination value obtained at each of the other times, i.e., within a certain predetermined range or window. For example, at 50 percent fill, the values for C1 to C5 of 0.707, 0.598, 0.5, 0.402, and 0.293 respectively indicate that the angle of inclination is approximately 10 degrees. At 40 percent fill, the values for C1 to C5 of 0.624, 0.524, 0.428, 0.323, and 0.183 respectively also indicate an angle of inclination of approximately 10 degrees. At a 35 percent fill, the values for C1 to C5 of 0.585, 0.487, 0.389, 0.276, and 0.095 respectively also indicate an angle of inclination of 10 degrees. If the readings obtained continue to indicate an angle of inclination of approximately 10 degrees for each of the times, it may be concluded that there is a lack of motion so that the micro-processor would then be programmed to effect the transmission of signal 410. Since the angle of inclination is a parameter which is derived from the zonal readings, the difference or lack of difference in zonal capacitance measurements at a plurality of times may alternatively be used for sensing lack of motion. Alternatively, the micro-processor may be programmed to initially merely signal the user and to thereafter transmit a signal to others only after lack of motion is sensed over a preselected longer period of time.

The alarm 144 of Fig. 6 may be used as the alarm device 414 in which event the alarm 144 may be suitably provided to emit a detectable signal to indicate lack of motion which is different from the signal emitted to indicate a low level of cryogenic liquid.

Where the values indicate a wide angle of inclination range (for example, see the values for 50 to 90 degrees at 50 percent fill), it may still be desirable to effect transmission of the "man down" signal if each of a set of readings over the period of time is not inconsistent with a particular angle of inclination since it may be considered desirable to err on the side of safety. However, as the number of capacitor plates is increased, such broad ranges will narrow for greater preciseness. The micro-processor 402 is further programmed to provide a resettable timer means 416 which resets the micro-processor 402 after the predetermined period of time to start a new comparison. By "a plurality of times," as used herein and in the claims, is meant to include a continuous obtaining and comparing of the angle of inclination values over the predetermined period of time. Thus, the motion sensor 400 may comprise the interval timer 406 or other suitable means which allows either periodic or continuous comparison of the angle of inclination values. The circuitry for the motion sensor 400 may be provided using principles commonly known to those of ordinary skill in the art to which this invention pertains.

Reference is made to the simultaneously filed patent application entitled "Quantity and Motion Sensor and Method" which is assigned to the assignee of the present invention and incorporated herein by reference.

It can thus be seen that the present invention provides a sensor apparatus and method for detecting and indicating the level of liquid in a container such as a cryogenic liquid Dewar container independent of the physical motions acting on the container and independent of the spatial orientation of the container. Further, the present invention provides a sensor apparatus and method for detecting and sensing the spatial orientation of the container independent of the volume of liquid therein so as to initiate a "man-down" alarm.

It is intended that the foregoing description only be illustrative of the present invention and that the present invention is limited only by the hereafter appended claims. For example, there may be various ways of determining a best fit other than as specifically described herein, and such other ways are meant to come within the present invention as defined by the appended claims.

| Analysis of Cylinder Volume | |
|---|---|
| r : = 5.7 | Outer cylinder radius in cm. |
| ri := 4.37 | Inner cylinder radius in cm. |
| hi := 37.3 | Inner cylinder length in cm. |
| h := hi·(1.168) | Outer cylinder length in cm |
| $p_{fill}$ := 0.25 | Input: Specify percent filled |
| K := 5 | Specify number of capacitor sements |
| tol := $1 \cdot 10^{-3}$ | Tolerance on equality tests |
| $\theta := \frac{[1 \cdot \pi]}{6}$ | Input: Angle -- 0 equals horizontal |

Total Cylinder Surface Area: $\qquad A_{cyl} := 2 \cdot \pi \cdot r \cdot h \qquad A_{cap} := 2 \cdot \pi \cdot ri \cdot hi$

$$A_{cyl} = 1560.294 \qquad A_{cap} = 1024.165$$

Total Cylinder Volume: $\qquad V_{cyl} := \pi \cdot r^2 \cdot h$

$$V_{cyl} = 4446.837$$

Filled Cylinder Volume:

$$V_{fill} := p_{fill} \cdot V_{cyl}$$

$$V_{fill} = 1111.709$$

$$\theta 1 := \theta \cdot \left[ \frac{180}{\pi} \right]$$

1. Calculate Boundaries of 4 Regimes and Area versus x Matrix

a) One End Partially Submerged; Other End Not Submerged

$xst := -r \cdot \cos(\theta)$
$xend := if\left[ r \cdot \cos(\theta) < h \cdot \sin(\theta) - r \cdot \cos(\theta), r \cdot \cos(\theta), h \cdot \sin(\theta) - r \cdot \cos(\theta) \right]$

$ipossa := if(|xst - xend| < tol, 0.0, 1.0)$

Note limit for opposite submerging before first end fully submerged

$\theta1 = 30$ $\qquad$ $xst = -4.936$ $\qquad$ $xend = 4.936$

$xa := -\infty$
$y := 1$

Given

$$\phi[y, \alpha] := acos\left[ \frac{y}{r \cdot \cos(\alpha)} \right]$$

$$V_{fill} = \left[ r^2 \cdot \frac{y}{\sin(\alpha)} \cdot [\pi - \phi[y, \alpha]] + \left[ 2 \cdot \frac{r^3}{3} \cdot \frac{\cos(\alpha)}{\sin(\alpha)} \cdot \sin[\phi[y, \alpha]] \right] + \frac{(y)^3}{3 \cdot \sin(\alpha) \cdot \cos(\alpha)^2} \cdot \tan[\phi[y, \alpha]] \right]$$

$depth(\alpha) := find(y)$

$xa := depth(\alpha)$
$xa = -1 \cdot 10^{307}$
| did not find solution |
$ipossa := if(xa < xst, 0, 1)$
$ipossa := if(xa > xend, 0, ipossa)$

$ipossa = 0$

b) One End Fully Submerged; Other End Not Submerged

$$xst := if[r \cdot cos(\theta) < h \cdot sin(\theta) - r \cdot cos(\theta), r \cdot cos(\theta), 0.0]$$
$$xend := if[r \cdot cos(\theta) < h \cdot sin(\theta) - r \cdot cos(\theta), h \cdot sin(\theta) - r \cdot cos(\theta), 0]$$

$$ipossb := if(|xst - xend| < tol, 0.0, 1.0)$$

$\theta 1 = 30$ $\qquad\qquad$ $xst = 4.936$ $\qquad\qquad$ $xend = 16.847$

$$xb := -\infty$$

$$xb := \frac{V_{fill} \cdot sin(\theta)}{[\pi \cdot r^2]}$$

$$xb = 5.446$$

$$ipossb := if(xb < xst, 0, 1)$$
$$ipossb := if(xb > xend, 0, ipossb)$$

$$ipossb = 1$$

c) One End Fully Submerged; Other End Partially Submerged

$$xst := if\left[ h\cdot\sin(\theta) - r\cdot\cos(\theta) > r\cdot\cos(\theta), h\cdot\sin(\theta) - r\cdot\cos(\theta), r\cdot\cos(\theta)\right]$$
$$xend := \left[ h\cdot\sin(\theta) + r\cdot\cos(\theta)\right]$$

$$ipossc := if(|xst - xend| < tol, 0.0, 1.0)$$

$$\theta_1 = 30 \qquad\qquad xst = 16.847 \qquad\qquad xend = 26.72$$

$$x2 := 1$$
$$x2 := 1 \qquad\qquad xc := -\infty$$

Given

$$\phi(x2) := a\cos\left[\frac{x2}{r\cdot\cos(\theta)}\right]$$

$$V_{fill} = V_{cyl} - r^2\cdot\frac{x2}{\sin(\theta)}\cdot\left[\pi - \phi(x2)\right] - 2\cdot\frac{r^3}{3}\cdot\frac{\cos(\theta)}{\sin(\theta)}\cdot\sin\left[\phi(x2)\right] - \frac{(x2)^3}{3\cdot\sin(\theta)\cdot\cos(\theta)^2}\cdot\tan\left[\phi(x2)\right]$$

$$xsol := find(x2)$$

did not find solution

$$xc := -xsol + h\cdot\sin(\theta)$$

$$xc = -1\cdot10^{307}$$

$$ipossc := if(xc < xst, 0, 1)$$
$$ipossc := if(xc > xend, 0, ipossc)$$

$$ipossc = 0$$

d) Both Ends Partially Submerged

$$xst := if\left[ h \cdot \sin(\theta) - r \cdot \cos(\theta) > r \cdot \cos(\theta), 0.0, h \cdot \sin(\theta) - r \cdot \cos(\theta) \right]$$
$$xtemp := if\left[ h \cdot \sin(\theta) + r \cdot \cos(\theta) < r \cdot \cos(\theta), h \cdot \sin(\theta) + r \cdot \cos(\theta), r \cdot \cos(\theta) \right]$$
$$xend := if\left[ h \cdot \sin(\theta) - r \cdot \cos(\theta) > r \cdot \cos(\theta), 0.0, xtemp \right]$$

$$ipossd := if(|xst - xend| < tol, 0.0, 1.0)$$

$$\theta 1 = 30 \qquad\qquad xst = 0 \qquad\qquad xend = 0$$

$$x := 0$$
$$xd := -\infty$$

$$u1(x) := \frac{x}{r \cdot \cos(\theta)}$$

$$u2(x) := \left[ \frac{x}{r \cdot \cos(\theta)} - h \cdot \frac{\tan(\theta)}{r} \right]$$

$$a1(x) := r^2 \cdot \frac{h}{u2(x) - u1(x)} \cdot \left[ \left[ u1(x) \cdot a\cos(u1(x)) - \sqrt{1 - (u1(x))^2} \right] - \left[ \frac{-1}{3} \cdot \sqrt{\left[ 1 - (u1(x))^2 \right]^3} \right] \right]$$

$$a2(x) := r^2 \cdot \frac{h}{u2(x) - u1(x)} \cdot \left[ \left[ u2(x) \cdot a\cos(u2(x)) - \sqrt{1 - (u2(x))^2} \right] - \left[ \frac{-1}{3} \cdot \sqrt{\left[ 1 - (u2(x))^2 \right]^3} \right] \right]$$

Given

$$V_{fill} = \left[ \pi \cdot r^2 \cdot h - (a2(x) - a1(x)) \right]$$

$$xd := find(x)$$

did not find solution

$$xd = -1 \cdot 10^{307}$$

$$ipossd := if(xd < xst, 0, 1)$$
$$ipossd := if(xd > xend, 0, ipossd)$$

$$ipossd = 0$$

Setup for Surface Area Calculation

1. Select Valid X value

iposs := ipossa + ipossb + ipossc + ipossd  ipossa = 0    ipossb = 1

iposs = 1                                    ipossc = 0    ipossd = 0

$$xa = -1 \cdot 10^{307} \qquad xb = 5.446 \qquad xc = -1 \cdot 10^{307} \qquad xd = -1 \cdot 10^{307}$$

$x := \text{if}[\, ipossa = 1 , xa, -\infty\,]$

$x := \text{if}(ipossb = 1 , xb, x)$

$x := \text{if}(ipossc = 1 , xc, x)$

$x := \text{if}(ipossd = 1 , xd, x)$

$x = 5.446$

2. Set parameters for inner cylindrical capactor or segment area

$rx := ri \qquad\qquad\qquad hx := \dfrac{hi}{K}$

$h = 43.566 \qquad hi = 37.3 \qquad hx = 7.46$

$A_x := 2 \cdot \pi \cdot rx \cdot hx \qquad\qquad A_x = 204.833$

Area calculations

1. Calculate Boundaries of 4 Regimes and Area versus x Matrix

a) One End Partially Submerged; Other End Not Submerged

$xsta := -rx \cdot \cos(\theta)$

$xenda := if\left[ rx \cdot \cos(\theta) < hx \cdot \sin(\theta) - rx \cdot \cos(\theta), rx \cdot \cos(\theta), hx \cdot \sin(\theta) - rx \cdot \cos(\theta) \right]$

$\theta 1 = 30 \qquad\qquad xsta = -3.785 \qquad\qquad xenda = -0.055$

$ipossa(d) := if(d < xsta, 0, 1)$

$ipossa(d) := if(d > xenda, 0, ipossa(d))$

$$\alpha(d) := \left[ \frac{d}{rx \cdot \cos(\theta)} \right]$$

$$\phi(d) := acos\left[ \alpha(d) \right]$$

$$Aa(d) := \frac{2 \cdot rx \cdot d \cdot \left[ \pi - \phi(d) \right]}{\sin(\theta)} + 2 \cdot rx^2 \cdot \frac{\cos(\theta)}{\sin(\theta)} \cdot \sin\left[ \phi(d) \right]$$

$$Aa(d) := if(ipossa(d) = 0, 0, Aa(d))$$

b) One End Fully Submerged; Other End Not Submerged

$$xstb := if \left[ rx \cdot cos(\theta) < hx \cdot sin(\theta) - rx \cdot cos(\theta), rx \cdot cos(\theta), 0.0 \right]$$
$$xendb := if \left[ rx \cdot cos(\theta) < hx \cdot sin(\theta) - rx \cdot cos(\theta), hx \cdot sin(\theta) - rx \cdot cos(\theta), 0 \right]$$

$\theta_1 = 30$               $xstb = 0$               $xendb = 0$

$$ipossb(d) := if(d < xstb, 0, 1)$$
$$ipossb(d) := if(d > xendb, 0, ipossb(d))$$

$$Ab(d) := 2 \cdot \pi \cdot d \cdot \frac{rx}{sin(\theta)}$$

$$Ab(d) := if(ipossb(d) = 0, 0, Ab(d))$$

c) One End Fully Submerged; Other End Partially Submerged

$$xstc := if \left[ hx \cdot sin(\theta) - rx \cdot cos(\theta) > rx \cdot cos(\theta), hx \cdot sin(\theta) - rx \cdot cos(\theta), rx \cdot cos(\theta) \right]$$
$$xendc := \left[ hx \cdot sin(\theta) + rx \cdot cos(\theta) \right]$$

$\theta_1 = 30$               $xstc = 3.785$               $xendc = 7.515$

$$ipossc(d) := if(d < xstc, 0, 1)$$
$$ipossc(d) := if(d > xendc, 0, ipossc(d))$$

$$x2(d) := -d + hx \cdot sin(\theta)$$

$$\phi(d) := acos \left[ \frac{x2(d)}{rx \cdot cos(\theta)} \right]$$

$$Ac(d) := A_x - \frac{2 \cdot rx \cdot x2(d) \cdot \left[ \pi - \phi(d) \right]}{sin(\theta)} - 2 \cdot rx^2 \cdot \frac{cos(\theta)}{sin(\theta)} \cdot sin \left[ \phi(d) \right]$$

$$Ac(d) := if(ipossc(d) = 0, 0, Ac(d))$$

d) Both Ends Partially Submerged

$$\text{xstd} := \text{if}\big[\, hx \cdot \sin(\theta) - rx \cdot \cos(\theta) > rx \cdot \cos(\theta)\,,\, 0.0\,,\, hx \cdot \sin(\theta) - rx \cdot \cos(\theta) \,\big]$$
$$\text{xtemp} := \text{if}\big[\, hx \cdot \sin(\theta) + rx \cdot \cos(\theta) < rx \cdot \cos(\theta)\,,\, hx \cdot \sin(\theta) + rx \cdot \cos(\theta)\,,\, rx \cdot \cos(\theta) \,\big]$$
$$\text{xendd} := \text{if}\big[\, hx \cdot \sin(\theta) - rx \cdot \cos(\theta) > rx \cdot \cos(\theta)\,,\, 0.0\,,\, \text{xtemp} \,\big]$$

$$\theta_1 = 30 \qquad\qquad \text{xstd} = -0.055 \qquad\qquad \text{xendd} = 3.785$$

$$\text{ipossd}(d) := \text{if}(d < \text{xstd}, 0, 1)$$
$$\text{ipossd}(d) := \text{if}(d > \text{xendd}, 0, \text{ipossd}(d))$$

$$u1(d) := \left[\frac{-d}{\big[\, rx \cdot \cos(\theta) \,\big]}\right] \qquad\qquad u2(d) := \left[\frac{\big[\,-d + hx \cdot \sin(\theta)\,\big]}{\big[\, rx \cdot \cos(\theta) \,\big]}\right]$$

$$a1(d) := \frac{2 \cdot (rx)^2}{\big[\,-\tan(\theta)\,\big]} \cdot \left[\, u1(d) \cdot a\cos(u1(d)) - \sqrt{1 - (u1(d))^2} \,\right]$$

$$a2(d) := \frac{2 \cdot (rx)^2}{\big[\,-\tan(\theta)\,\big]} \cdot \left[\, u2(d) \cdot a\cos(u2(d)) - \sqrt{1 - (u2(d))^2} \,\right]$$

$$\text{Ad}(d) := (-a2(d) + a1(d))$$
$$\text{Ad}(d) := \text{if}(\text{ipossd}(d) = 0, 0, \text{Ad}(d))$$

e. Cylinder Submerged

$$\text{iposse}(d) := \text{if}(d > \text{xendc}, 1, 0)$$

$$\text{Ae}(d) := 2 \cdot \pi \cdot rx \cdot hx$$
$$\text{Ae}(d) := \text{if}(\text{iposse}(d) = 0, 0, \text{Ae}(d))$$
$$\text{Ae}(x) = 0$$

Create area computation function

$A(d) := if(ipossa(d) = 1, Aa(d), 0)$

$A(d) := if(ipossb(d) = 1, Ab(d), A(d))$

$A(d) := if(ipossc(d) = 1, Ac(d), A(d))$

$A(d) := if(ipossd(d) = 1, Ad(d), A(d))$

$A(d) := if(iposse(d) = 1, Ae(d), A(d))$

$A(x) = 178.868$

Define and Compute Cylinder Areas

$l := 0 .. (K-1)$ $\qquad$ $n := 1 .. K-1$

$$y_0 := x - \frac{(h - hi)}{2} \cdot \sin(\theta)$$

$$y_n := y_{[n-1]} - hx \cdot \sin(\theta)$$

$$area_l := A[y_l] \qquad\qquad A_{tot} := \sum_l area_l$$

$$anorm_l := \frac{area_l}{A_x} \qquad\qquad A_{norm} := \frac{A_{tot}}{A_{cap}}$$

### Area Distribution Across Segments

Area(cm^2)

$$\text{area} = \begin{bmatrix} 142.72 \\ 69.52 \\ 0.78 \\ 0 \\ 0 \end{bmatrix}$$

Normalized Area

$$\text{anorm} = \begin{bmatrix} 0.697 \\ 0.339 \\ 0.004 \\ 0 \\ 0 \end{bmatrix}$$

$A_{tot} = 213.026$

$A_{norm} = 0.208$

Input Values (Percent filled, Angle):

$$P_{fill} = 0.25 \qquad \theta \cdot \frac{180}{\pi} = 30$$

Surface Areas (Outer Cylinder, Capacitor, Sector):

$$A_{cyl} = 1560.294 \qquad A_{cap} = 1024.165 \qquad A_x = 204.833$$

**Claims**

1. A device to be worn by a user to signal a lack of motion of the device for a predetermined period of time comprising:

    a) a container means (10) having liquid (16) therein
    b) means (76, 78A to 78E) for sensing contact by the liquid (16) with each of a plurality of zones into which the container means (10) is divided at each of a plurality of times over the predetermined period of time and for obtaining a set of values representative of percentage of contact of the liquid (16) with each of the zones at each of the times;
    c) means (86) for comparing the sets of values; and
    d) means for signalling when the sets of values are substantially the same.

2. The device of claim 1, wherein the sensing (76, 78A to 78E) comprises a plurality of capacitors corresponding to the zones, wherein the liquid (16) is flowable between plates of each capacitor to serve at least partially as a dielectric therefor and further comprising means for measuring the capacitance of each of the capacitors.

3. The device of claim 1 or claim 2, wherein the container means (10) is elongate and cylindrical and axially divided over the length thereof into the zones.

4. The device of any of claims 1 to 3, wherein the sensing means (76, 78A to 78E) comprises:

    a) a plurality of capacitor means corresponding to the zones, and wherein the container means (10) comprises an enclosed, surrounding side wall (12) and wherein each of the capacitor means is comprised of first and second conductors (76, 78A to 78E) with the first conductor (76) disposed in a proximately spaced relationship with respect to the second conductor (78A to 78E) provided by the surrounding side wall to provide the zones into which the container means (10) is divided by the plurality of capacitor means, wherein the capacitor means are contactable by the liquid (16) contained inside the container means (10) to thereby provide a plurality of capacitance measurements ($C_1$ to $C_5$) related to the extent the plurality of capacitor means are contacted by the liquid (16) in the container means (10), and

b) computer means (86) for determining at least one of the quantity of liquid (16) and the spatial orientation of the container means (10) by appropriate manipulation of the capacitance measurements ($C_1$ to $C_5$) with respect to reference capacitance values for various percent fill quantities of the liquid (16) in the container means (10) at various spatial orientations.

5. The device of claim 4 wherein the container means (10) has a cylindrical shape along and about a longitudinal axis and wherein the capacitor means comprises the first conductors (76) provided by a respective plurality of first conductive band means aligned in series inside the container means (10) in a coaxial relationship with the longitudinal axis and in a proximately spaced and parallel relationship with respect to the surrounding side wall (12) providing the second conductors (78A to 78E) thereby dividing the container means (10) into capacitor zones and wherein the plurality of first conductive band means (76) and the surrounding side wall (12) provide the plurality of capacitance measurements directly related to the extent the plurality of first conductive band means (76) are immersed in the liquid (16) serving as the dielectric for the capacitor means, the plurality of capacitance measurements further being manipulatable with respect to the reference capacitance values for various percent fill quantities of the liquid (16) in the container means (10) at various reference orientations to thereby indicate the spatial orientation of the container means (10).

6. The device of claim 4 wherein the plurality of capacitance measurements are manipulated by comparing them to the reference capacitance values to thereby obtain a best fit between the capacitance measurements and the reference capacitance values at various percent fill quantities and at the various spatial orientations.

7. The device of claim 4 wherein the reference capacitance values are derived from either the liquid (16) in the container means or a reference fluid serving as a second dielectric for a known extent of the plurality of capacitor means.

8. The device of claim 4 wherein an inner wall (14) of the container means (10) has a generally cylindrical shape closed by first and second closure means provided at opposed ends of the cylindrical shape and wherein the first conductors are disposed adjacent to the inner wall to immerse at least part of them in the liquid (16) independent of the spatial orientation of the container means (10).

9. The device of claim 4 wherein a thermometer means (92) provides a measurement of the temperature of the liquid (16) within the container means (10) and wherein the computer means (86) serves to manipulate the comparison of the plurality of capacitance measurements to the reference capacitance values with respect to the temperature measurement to determine at least one of the quantity of liquid (16) in the container means (10) and the spatial orientation of the container means (10).

10. The device of claim 4 wherein the liquid comprises a cryogenic liquid (16).

11. The device of claim 10 wherein the cryogenic liquid (16) is comprised of a breathable mixture containing oxygen and nitrogen.

12. The device of claim 1 wherein the container means (10) comprises an inner container means (14) provide to hold a cryogenic liquid (16) as the liquid and an insulation means enclosing the inner container means in a surrounding relationship to retard ambient heat conduction and radiation to the cryogenic liquid (16).

13. The device of claim 12 wherein the insulation means comprises an outer container means (12) enclosing the inner container means (14) in the surrounding relationship with an insulation material (20) provided in an intermediate space (18) formed between the inner and outer container means (14, 12).

14. The device of claim 4 wherein the computer means (86) has a database for comparing the set of measured percentages of contact to a plurality of sets in the database of reference percentage of contact values for the container means (10) at various volume percentages and spatial orientations, wherein the computer means (86) includes means for computing the sum of the differences or the sum of the squares of differences between the reference percentage of contact values and the corresponding measured percentages of contact for each of the plurality of sets of reference percentage of contact values to select a best fit which is a volume percentage and/or spatial orientation at which the computed sum of the squares is the least.

15. The device of claim 14 wherein the computer means (86) includes means for scaling the measured percentages of contact to create an uncontacted value as zero and a fully contacted value as one, the sets of reference percentage of contact values also being scaled so that an uncontacted value is zero and a fully contacted value is one, means for computing an average volume percentage by adding the scaled measured percentages of contact and dividing the sum by the number of zones, and means for computing the sum of the squares of differences between the scaled reference percentage of contact values and the corresponding scaled measured percentages of contact for each of the plurality of sets of scaled reference percentage of contact values for a preselected number of volume percentages closest to the computed average volume percentage whereby the sum of the squares computations are not made for the sets of scaled reference percentage of contact values for all of the volume percentages for which sets of scaled reference percentage of contact values are available and wherein a best fit is a volume percentage at which the computed sum of the squares is the least.

16. The device of claim 14 wherein the computer means (86) includes means for scaling the measured percentages of contact to create an uncontacted value as zero and a fully contacted value as one, the set of reference percentage of contact values also being scaled so that an uncontacted value is zero and a fully contacted value is one, means for computing an average volume percentage by adding the scaled measured percentages of contact and dividing the sum by the number of zones, means for computing the sum of the squares of differences between the scaled reference percentage of contact values and the corresponding scaled measured percentages of contact for each of the plurality of sets of scaled reference percentage of contact values for the volume percentage closest to the computed average volume percentage and for a plurality of volume percentages both less than and greater than said closest volume percentage, means for adding a constant to each sum of squares and dividing into another constant and taking the square root to obtain a comparative number wherein a best fit is a volume percentage at which the computed comparative number is the greatest.

17. A method for sensing a lack of motion of a container means (10) a predetermined period of time, comprising the steps of:

   a) providing the container means (10) to contain a liquid (16);
   b) sensing contact by the liquid (16) with each of a plurality of zones into which the container means (10) is divided at each of a plurality of times over the predetermined period of time thereby obtaining a set of values representative of percentage of contact of the liquid (16) with each of the zones at each of the times; and
   c) comparing the sets of values whereby to sense a lack of motion of the container means (10) if the sets of values are substantially the same.

18. The method of claim 17 further comprising the step of operating an alarm (154) when the sets of values are substantially the same.

19. The method of claim 17 wherein the step of sensing contact comprises providing a plurality of capacitors in the container means (10) corresponding to the zones wherein the liquid is capable of flowing freely between plates of each capacitor to serve at least partially as a dielectric therefor, and measuring the capacitance of each of said capacitors.

20. The method of claim 17 further comprising the step of selecting the container means (10) to be an elongate cylindrical container which is axially divided into the zones over the length thereof.

21. The method of claim 17 including sensing lack of motion of the container means (10) according to the further steps of:

   a) providing the sensing means comprising a plurality of capacitor means corresponding to the zones, and wherein the container means (10) comprises an enclosed, surrounding side wall (12) and wherein each of the capacitor means comprise first and second conductors (76, 78A to 78E) first conductor (76) disposed in a proximately spaced relationship with respect to the second conductor (78A to 78E) provided by the surrounding side wall (14) to divide the container means (10) into capacitor zones delineated by the plurality of capacitor means;
   b) electrically charging the capacitor means, wherein the liquid (16) held inside the container means (10) serving as a dielectric to thereby provide a plurality of capacitance measurements related to the extent the plurality of capacitor means are immersed in the liquid (16) in the container means (10);

c) determining at least one of a quantity of the liquid (16) and the spatial orientation of the container means (10) by appropriate manipulation of the capacitance measurements with respect to reference capacitance values of various percent fill quantities of the liquid in the container means (10) at various spatial orientations; and

d) utilizing at least one of the determined quality of the liquid (16) in the container means (10) and the determined spatial orientation of the container means (10).

22. The method of claim 21 including scaling the capacitance measurements such that they are directly related to the extent the first conductors are immersed in the liquid in the container means (10).

23. The method of claim 21 including manipulating the capacitance measurements by comparing them to the reference capacitance values to thereby obtain a best fit between the capacitance measurements and the reference capacitance values at the various percent fill quantities and at the various spatial orientations.

24. The method of claim 21 further including providing the container means (10) having a cylindrical shape along and about a longitudinal axis, the first conductors provided by a plurality of first conductive band means (76) aligned coaxially along and about the longitudinal axis and in a proximately spaced and parallel relationship with respect to the surrounding side wall providing the second conductors (78A to 78E) thereby dividing the container means (10) into the capacitor zones to provide the plurality of capacitance measurements directly related to the extent the plurality of first conductive band means are immersed in the liquid (16).

25. The method of claim 21 wherein the container means (10) comprises an inner container means (14) provided to hold a cryogenic liquid (16) as the liquid and an insulation means (20) enclosing the inner container means (14) in a surrounding relationship to retard ambient heat conduction and radiation to the cryogenic liquid (16).

26. The method of claim 21 including operating a computer (86) thereby computing the sum of the differences or the sum of the squares of differences between the reference percentage of contact values and the corresponding measured percentages of contact for each of the plurality of sets of reference percentage of contact values to select a best fit which is a volume percentage and/or spatial orientation at which the computed sum of differences or sum of the squares of differences is the least.

27. The method of claim 26 comprising operating a computer (86) thereby computing an average volume percentage and further operating the computer thereby computing the sum of the squares of differences between the reference percentage of contact values and the corresponding measured percentages of contact for each of the plurality of sets of reference percentage of contact values for a preselected number of volume percentages closest to the computed average volume percentage whereby the sum of the squares computations are not made for the sets of reference percentage of contact values for all of the volume percentages for which sets of reference percentage of contact values are available and wherein a best fit is a volume percentage at which the computed sum of the squares is the least.

28. The method of claim 26 comprising operating a computer (86) thereby scaling the measured percentages of contact to create an uncontacted value as zero and a fully contacted value as one, the sets of reference percentage of contact values also being scaled so that an uncontacted value is zero and a fully contacted value is one, computing the average volume percentage by adding the scaled measured percentages of contact and dividing the sum by the number of zones, computing the sum of the squares of differences between the scaled reference percentage of contact values and the scaled corresponding measured percentages of contact for each of the plurality of sets of scaled reference percentage of contact values for the volume percentage closest to the computed average volume percentage and for a plurality of volume percentages both less than and greater than said closest volume percentage, adding a constant to each sum of squares and dividing into another constant and taking the square root to obtain a comparative number wherein a best fit is a volume percentage at which the computed comparative number is the greatest.

29. The method of claim 28 further comprising computing from the comparative numbers which are neighbors to the greatest comparative number a weighted average volume percentage to obtain a closer best fit.

30. The method of claim 29 further comprising computing from the comparative numbers which are neighbors to the greatest number a weighted average spatial orientation.

**Patentansprüche**

1. Vorrichtung zum Tragen durch einen Verwender, um ein Fehlen von Bewegung der Vorrichtung über eine vorbestimmte Zeit zu signalisieren, umfassend

   (a) eine Behälter-Einrichtung (10) mit einer darin enthaltenen Flüssigkeit (16);
   (b) Mittel (76, 78A bis 78E) zum Fühlen von Kontakt der Flüssigkeit (16) mit jeweils einer Mehrzahl von Zonen, in die die Behälter-Einrichtung (10) unterteilt ist, bei jeweils einer Mehrzahl von Malen über die vorbestimmte Zeit und zum Erhalt eines Satzes von Werten, die einen Prozentwert des Kontakts der Flüssigkeit (16) mit jeder der Zonen bei jedem der Male wiedergeben;
   (c) Mittel (86) zum Vergleichen der Wertesätze; und
   (d) Mittel, um zu signalisieren, wenn die Wertesätze im wesentlichen dieselben sind.

2. Vorrichtung nach Anspruch 1, worin das Mittel (76, 78A bis 78E) zum Fühlen eine Mehrzahl von Kondensatoren umfaßt, die den Zonen entsprechen, in denen die Flüssigkeit (16) zwischen Platten jedes Kondensators fließfähig ist und so wenigstens teilweise als Dielektrikum für einen Kondensator dient, und worin das Mittel weiter Mittel zum Messen der Kapazität jedes der Kondensatoren umfaßt.

3. Vorrichtung nach Anspruch 1 oder Anspruch 2, worin die Behälter-Einrichtung (10) länglich und zylinderartig und axial über ihre Länge in die Zonen unterteilt ist.

4. Vorrichtung nach einem der Ansprüche 1 bis 3, worin das Mittel (76, 78A bis 78E) zum Fühlen umfaßt:

   (a) eine Mehrzahl von Kondensator-Einrichtungen, die den Zonen entsprechen, und worin die Behälter-Einrichtung (10) eine geschlossene, umgebende Seitenwand (12) umfaßt und worin jede der Kondensator-Einrichtungen aus einem ersten und einem zweiten Leiter (76, 78A bis 78E) besteht, wobei der erste Leiter (76) in einer benachbarten räumlichen Beziehung in Bezug auf den zweiten Leiter (78A bis 78E) angeordnet ist, der von der umgebenden Seitenwand gebildet wird, wodurch die Zonen geschaffen werden, in die die Behälter-Einrichtung (10) durch die Mehrzahl von Kondensator-Einrichtungen unterteilt ist, worin die Kondensator-Einrichtungen mit der Flüssigkeit (16) in Kontakt kommen können, die in der Behälter-Einrichtung (10) enthalten ist, wodurch eine Mehrzahl von Kapazitätsmessungen (C1 bis C5) erfolgt, die mit dem Ausmaß in Beziehung stehen, mit dem die Mehrzahl von Kondensator-Einrichtungen mit der Flüssigkeit (16) in der Behälter-Einrichtung (10) in Kontakt steht; und
   (b) Rechner-Einrichtungen (86) zur Bestimmung wenigstens eines der Werte Menge an Flüssigkeit (16) und räumliche Orientierung der Behälter-Einrichtung (10) durch geeignete Verarbeitung der Werte der Kapazitätsmessungen (C1 bis C5) in Bezug auf Referenz-Kapazitätswerte für verschiedene Prozentwerte der Füllmengen der Flüssigkeit (16) in der Behälter-Einrichtung (10) bei verschiedenen räumlichen Orientierungen.

5. Vorrichtung nach Anspruch 4, worin die Behälter-Einrichtung (10) eine zylindrische Form entlang einer und um eine Längsachse aufweist und worin die Kondensator-Einrichtung die ersten Leiter (76) umfaßt, die von einer jeweiligen Mehrzahl erster leitfähiger Band-Einrichtungen gestellt werden, die innerhalb der Behälter-Einrichtung (10) in koaxialer Beziehung zu der Längsachse und in naher räumlicher und paralleler Beziehung in Bezug auf die umgebende Seitenwand (12), die die zweiten Leiter (78A bis 78E) stellt, der Reihe nach angeordnet ist, wodurch die Behälter-Einrichtung (10) in Kondensator-Zonen unterteilt wird, und worin die Mehrzahl der ersten leitfähigen Band-Einrichtungen (76) und die umgebende Seitenwand (12) die Mehrzahl von Kapazitätsmessungen liefern, die in direkter Beziehung zu dem Ausmaß steht, in dem die Mehrzahl der ersten leitfähigen Band-Einrichtungen (76) in die als Dielektrikum für die Kondensator-Einrichtungen dienende Flüssigkeit (16) eingetaucht ist, wobei die Mehrzahl von Kapazitätsmessungen weiter verarbeitbar ist in Bezug auf die Referenz-Kapazitätswerte für verschiedene Prozentwerte der Füllmengen der Flüssigkeit (16) in der Behälter-Einrichtung (10) bei verschiedenen Referenz-Orientierungen, wodurch die räumliche Orientierung der Behälter-Einrichtung (10) angegeben wird.

6. Vorrichtung nach Anspruch 4, worin die Mehrzahl der Kapazitätsmessungen dadurch verarbeitet wird, daß man sie mit den Referenz-Kapazitätswerten vergleicht, wodurch eine beste Übereinstimmung zwischen den Werten der Kapazitätsmessungen und den Referenz-Kapazitätswerten bei verschiedenen Prozentwerten der Füllmengen und bei verschiedenen räumlichen Orientierungen erhalten wird.

7. Vorrichtung nach Anspruch 4, worin die Referenz-Kapazitätswerte entweder von der Flüssigkeit (16) in der Behälter-Einrichtung oder von einer Referenz-Flüssigkeit abgeleitet werden, die als zweites Dielektrikum für ein bekanntes Ausmaß der Mehrzahl der Kondensator-Einrichtungen dient.

8. Vorrichtung nach Anspruch 4, worin die Innenwand (14) der Behälter-Einrichtung (10) eine allgemein zylindrische Form aufweist und durch erste und zweite Verschluß-Einrichtungen geschlossen ist, die an einander gegenüberliegenden Enden der Zylinderform angebracht sind, und worin die ersten Leiter in Nachbarschaft zu der Innenwand angeordnet sind, wodurch wenigstens ein Teil von Ihnen in die Flüssigkeit (16) eingetaucht ist, unabhängig von der räumlichen Orientierung der Behälter-Einrichtung (10).

9. Vorrichtung nach Anspruch 4, worin eine Thermometer-Einrichtung (92) eine Messung der Temperatur der Flüssigkeit (16) innerhalb der Behälter-Einrichtung (10) liefert und worin die Rechner-Einrichtung (86) dazu dient, den Vergleich der Mehrzahl der Werte der Kapazitätsmessungen mit den Referenz-Kapazitätswerten in Bezug auf die Temperaturmessung durchzuführen, wodurch wenigstens einer der Werte Menge der Flüssigkeit (16) in der Behälter-Einrichtung (10) und räumliche Orientierung der Behälter-Einrichtung (10) bestimmt wird.

10. Vorrichtung nach Anspruch 4, worin die Flüssigkeit eine kryogene Flüssigkeit (16) umfaßt.

11. Vorrichtung nach Anspruch 10, worin die kryogene Flüssigkeit (16) aus einer atembaren Mischung besteht, die Sauerstoff und Stickstoff enthält.

12. Vorrichtung nach Anspruch 1, worin die Behälter-Einrichtung (10) eine innere Behälter-Einrichtung (14), die zum Beinhalten einer kryogenen Flüssigkeit (16) als der Flüssigkeit vorgesehen ist, und ein Isolationsmittel umfaßt, das die innere Behälter-Einrichtung in einer umgebenden Beziehung einschließt und so die Leitung und Abstrahlung der Wärme aus der Umgebung auf die kryogene Flüssigkeit (16) verlangsamt.

13. Vorrichtung nach Anspruch 12, worin das Isolationsmittel eine äußere Behälter-Einrichtung (12) umfaßt, die die innere Behälter-Einrichtung (14) in der umgebenden Beziehung mit einem Isolationsmaterial (20) einschließt, das in einem Zwischenraum (18) vorgesehen ist, der zwischen der inneren und der äußeren Behälter-Einrichtung (14, 12) gebildet ist.

14. Vorrichtung nach Anspruch 4, worin die Rechner-Einrichtung (86) eine Datenbank zum Vergleichen des Satzes von gemessenen Prozentwerten des Kontakts zu einer Mehrzahl von in der Datenbank vorhandenen Sätzen von Referenz-Prozentwerten des Kontakts für die Behälter-Einrichtung (10) bei verschiedenen Volumen-Prozentwerten und räumlichen Orientierungen aufweist, worin die Rechner-Einrichtung (86) Einrichtungen zum Berechnen der Summe der Differenzen oder der Summe der Quadratwerte der Differenzen zwischen den Referenz-Prozentwerten des Kontakts und den entsprechenden gemessenen Prozentwerten des Kontakts für jeden der Mehrzahl von Sätzen der Referenz-Prozentwerte des Kontakts einschließt und so einen am besten passenden Wert auswählt, der ein Volumen-Prozentwert und/oder ein Wert der räumlichen Orientierung ist, bei dem die berechnete Summe der Quadrate den kleinsten Wert hat.

15. Vorrichtung nach Anspruch 14, worin die Rechner-Einheit (86) einschließt: Einrichtungen zum Skalieren der gemessenen Prozentwerte des Kontakts zur Schaffung eines Werts des kontaktfreien Zustands als Null und eines einem vollständigen Kontakt entsprechenden Werts als Eins, wobei die Sätze der Referenz-Prozentwerte des Kontakts ebenfalls so skaliert sind, daß der Wert des kontaktfreien Zustands Null ist und der einem vollständigen Kontakt entsprechende Wert Eins ist; Einrichtungen zum Berechnen eines mittleren Volumen-Prozentwerts durch Addieren der skalierten gemessenen Prozentwerte des Kontakts und Dividieren der Summe durch die Zahl der Zonen; und Einrichtungen zum Berechnen der Summe der Quadratwerte der Differenzwerte zwischen den skalierten Referenz-Prozentwerten des Kontakts und den entsprechenden skalierten gemessenen Prozentwerten des Kontakts für jeden der Mehrzahl von Sätzen skalierter Referenz-Prozentwerte des Kontakts für eine vorgewählte Zahl von Volumen-Prozentwerten, die dem berechneten mittleren Volumen-Prozentwert am nächsten sind, wobei die Berechnungen der Summen der Quadratwerte nicht durchgeführt werden für die Sätze von skalierten Referenz-Prozentwerten des Kontakts für alle Volumen-Prozentwerte, für die Sätze von skalierten Referenz-Prozentwerten des Kontakts erhältlich sind, und worin der am besten passende Wert ein Volumen-Prozentwert ist, bei dem die berechnete Summe der Quadratwerte den kleinsten Wert hat.

16. Vorrichtung nach Anspruch 14, worin die Rechner-Einheit (86) einschließt: Einrichtungen zum Skalieren der gemessenen Prozentwerte des Kontakts zur Schaffung eines Werts des kontaktfreien Zustands als Null und eines einem vollständigen Kontakt entsprechenden Werts als Eins, wobei die Sätze der Referenz-Prozentwerte des Kontakts ebenfalls so skaliert sind, daß der Wert des kontaktfreien Zustands Null ist und der einem vollständigen Kontakt entsprechende Wert Eins ist; Einrichtungen zum Berechnen eines mittleren Volumen-Prozentwerts durch Addieren der skalierten gemessenen Prozentwerte des Kontakts und Dividieren der Summe durch die Zahl der Zonen; Einrichtungen zum Berechnen der Summe der Quadratwerte der Differenzwerte zwischen den skalierten Referenz-Prozentwerten des Kontakts und den entsprechenden skalierten gemessenen Prozentwerten des Kontakts für jeden der Mehrzahl von Sätzen skalierter Referenz-Prozentwerte des Kontakts für den Volumen-Prozentwert, der dem berechneten mittleren Volumen-Prozentwert am nächsten ist, und für eine Mehrzahl von Volumen-Pozentwerten, die sowohl kleiner als auch größer sind als der am nächsten liegende Volumen-Prozentwert; Einrichtungen zum Addieren einer Konstante zu jeder Summe von Quadratwerten und Dividieren durch eine andere Konstante und Ziehen der Quadratwurzel unter Erhalt einer Vergleichszahl, worin die am besten passende Zahl ein Volumen-Prozentwert ist, bei dem die berechnete Vergleichszahl am größten ist.

17. Verfahren zum Erfühlen eines Fehlens von Bewegung einer Behälter-Einrichtung (10) über eine vorbestimmte Zeit, umfassend die Schritte, daß man

(a) die Behälter-Einrichtung (10) in der Weise bereitstellt, daß sie eine Flüssigkeit (16) enthält;
(b) einen Kontakt der Flüssigkeit (16) mit jeder einer Mehrzahl von Zonen, in die die Behälter-Einrichtung (10) unterteilt ist, bei jedem einer Mehrzahl von Malen über eine vorbestimmte Zeit erfühlt, wodurch man einen Satz von Werten erhält, die für einen Prozentwert des Kontakts der Flüssigkeit (16) mit jeder der Zonen bei jedem der Male steht; und
(c) die Sätze von Werten vergleicht, wodurch ein Fehlen von Bewegung der Behälter-Einrichtung (10) erfühlt wird, wenn die Werte-Sätze im wesentlichen dieselben sind.

18. Verfahren nach Anspruch 17, umfassend weiter den Schritt des Betätigens eines Alarms (154), wenn die Werte-Sätze im wesentlichen dieselben sind.

19. Verfahren nach Anspruch 17, worin der Schritt des Erfühlens eines Kontakts den Schritt umfaßt, daß man eine Mehrzahl von Kondensatoren in der Behälter-Einrichtung (10) bereitstellt, die den Zonen entsprechen, in denen die Flüssigkeit frei zwischen Platten jedes Kondensators strömen kann und so wenigstens teilweise als Dielektrikum für diese dient, und daß man die Kapazität jedes der Kondensatoren mißt.

20. Verfahren nach Anspruch 17, umfassend weiter den Schritt, daß man die Behälter-Einrichtung (10) so wählt, daß sie ein länglicher zylindrischer Behälter ist, der axial über seine Länge in die Zonen unterteilt ist.

21. Verfahren nach Anspruch 17, einschließend das Erfühlen eines Fehlens von Bewegung der Behälter-Einrichtung (10) gemäß den folgenden Schritten:

(a) Bereitstellen der Fühler-Einrichtung, die eine Mehrzahl von Kondensator-Einrichtungen gemäß den Zonen umfaßt, und worin die Behälter-Einrichtung (10) eine geschlossene, umgebende Seitenwand (12) umfaßt und worin jede der Kondensator-Einrichtungen erste und zweite Leiter (76, 78A bis 78E) umfaßt, wobei der erste Leiter (76) in benachbart räumlicher Beziehung in Bezug auf den zweiten Leiter (78A bis 78E) angeordnet ist, der von der umgebenden Seitenwand (12) gebildet wird, wodurch die Behälter-Einrichtung (10) in Kondensator-Zonen unterteilt wird, die von der Mehrzahl von Kondensator-Einrichtungen flankiert werden;
(b) elektrisches Laden der Kondensator-Einrichtung, wobei die Flüssigkeit (16), die innerhalb der Behälter-Einrichtung (10) gehalten wird, als Dielektrikum dient, wodurch eine Mehrzahl von Kapazitätsmessungen, die mit dem Ausmaß in Beziehung stehen, mit dem die Kondensator-Einrichtungen in die Flüssigkeit (16) in der Behälter-Einrichtung (10) eingetaucht sind, geliefert wird;
(c) Bestimmen wenigstens eines der Werte Menge der Flüssigkeit (16) und räumliche Orientierung der Behälter-Einrichtung (10) durch passende Verarbeitung der Kapazitätsmessungen in Bezug auf die Referenz-Kapazitätswerte von verschiedenen Prozent-Mengenwerten der Füllung der Flüssigkeit in der Behälter-Einrichtung (10) bei verschiedenen räumlichen Orientierungen; und
(d) Verwenden wenigstens eines der Werte bestimmte Menge der Flüssigkeit (16) in der Behälter-Einrichtung (10) und bestimmte Werte der räumlichen Orientierung der Behälter-Einrichtung (10).

22. Verfahren nach Anspruch 21, einschließend ein Skalieren der Kapazitätsmessungen in der Weise, daß sie direkt in Beziehung stehen zu dem Ausmaß, mit dem die ersten Leiter in die Flüssigkeit in der Behälter-Einrichtung (10) eingetaucht sind.

**23.** Verfahren nach Anspruch 21, einschließend ein Verarbeiten der Werte der Kapazitätsmessungen durch Vergleichen mit den Referenz-Kapazitätswerten unter Erhalt einer besten Übereinstimmung zwischen den Kapazitäts-Messwerten und den Referenz-Kapazitätswerten bei verschiedenen Prozentwerten der Füllmengen und bei den verschiedenen räumlichen Orientierungen.

**24.** Verfahren nach Anspruch 21, welches weiter einschließt die Bereitstellung der Behälter-Einrichtung (10), die eine zylindrische Form entlang einer und um eine Längsachse aufweist, der ersten Leiter, die von einer Mehrzahl erster leitfähiger Bänder (76) gestellt werden, die in Reihe und koaxial entlang der und um die Längsachse und in einer benachbart räumlich angeordneten und parallelen Beziehung in Bezug auf die umgebende Seitenwand angeordnet sind, die die zweiten Leiter (78A bis 78E) stellt, wodurch die Behälter-Einrichtung (10) in die Kondensator-Zonen unterteilt wird und so die Mehrzahl von Kapazitätsmessungen geschaffen wird, die direkt in Beziehung stehen zu dem Ausmaß, mit dem die Mehrzahl erster leitfähiger Band-Einrichtungen in die Flüssigkeit (16) eingetaucht ist.

**25.** Verfahren nach Anspruch 21, worin die Behälter-Einrichtung (10) eine innere Behälter-Einrichtung (14), die dafür vorgesehen ist, eine kryogene Flüssigkeit (16) als die Flüssigkeit zu enthalten, und eine Isolier-Einrichtung (20) umfaßt, die die innere Behälter-Einrichtung (14) in einer umgebenden Beziehung einschließt, um die Wärmeleitung und Strahlung von der Umgebung zu der kryogenen Flüssigkeit (16) zu verzögern.

**26.** Verfahren nach Anspruch 21, einschließend das Betreiben eines Computers (86), um dadurch die Summe der Differenzen oder die Summe der Quadratwerte der Differenzen zwischen den prozentualen Referenz-Kontaktwerten und den entsprechenden gemessenen prozentualen Kontaktwerten für jeden der Mehrzahl der Sätze von Referenz-Prozentwerten des Kontakts zu berechnen und eine beste Übereinstimmung auszuwählen, die ein Volumen-Prozentwert und/oder eine räumliche Orientierung sind, bei der die berechnete Summe von Differenzen oder Summe der Quadratwerte von Differenzen den kleinsten Wert hat.

**27.** Verfahren nach Anspruch 26, umfassend das Betreiben eines Computers (86) unter Berechnen eines mittleren Volumen-Prozentwerts und weiter Betreiben eines Computers unter Berechnen der Summe der Quadratwerte der Differenzen zwischen den prozentualen Referenz-Kontaktwerten und den entsprechenden gemessenen prozentualen Kontaktwerten für jeden der Mehrzahl von Sätzen von prozentualen Referenz-Kontaktwerten für eine vorgewählte Zahl von Volumen-Prozentwerten, die dem berechneten mittleren Volumen-Prozentwert am nächsten sind, wobei die Berechnungen der Summe der Quadratwerte nicht durchgeführt werden für die Sätze von prozentualen Referenz-Kontaktwerten für alle Volumen-Prozent-Werte, für die Sätze von prozentualen Referenz-Kontaktwerten erhältlich sind und worin ein am besten passender Wert ein Volumen-Prozentwert ist, bei dem die berechnete Summe der Quadratwerte den kleinsten Wert hat.

**28.** Verfahren nach Anspruch 26, umfassend das Betreiben eines Computers (86), wodurch die gemessenen prozentualen Kontaktwerte skaliert werden und ein keinen Kontakt repräsentierender Wert als Null-Wert festgelegt wird und ein einen vollständigen Kontakt repräsentierender Wert als Wert Eins festgelegt wird, wobei die Sätze prozentualer Referenz-Kontaktwerte ebenfalls so skaliert werden, daß ein keinen Kontakt repräsentierender Wert als Null-Wert festgelegt wird und ein einen vollständigen Kontakt repräsentierender Wert als Wert Eins festgelegt wird; das Berechnen eines mittleren Volumen-Prozentwerts durch Addieren der skalierten gemessenen prozentualen Kontaktwerte und Dividieren der Summe durch die Zahl der Zonen; Berechnen der Summe der Quadratwerte der Differenzen zwischen den skalierten prozentualen Referenz-Kontaktwerten und den entsprechenden skalierten gemessenen prozentualen Kontaktwerten für jeden der Mehrzahl von Sätzen skalierter prozentualer Referenz-Kontaktwerte für den Volumen-Prozentwert, der dem berechneten mittleren Volumen-Prozentwert am nächsten ist, und für eine Mehrzahl von Volumen-Prozentwerten, die sowohl niedriger als auch höher als der nächste Volumen-Prozentwert sind; Addieren einer Konstante zu jeder Summe von Quadratwerten und Dividieren durch eine andere Konstante und Ziehen der Quadratwurzel unter Erhalt einer Vergleichszahl, worin ein am besten passender Wert ein Volumen-Prozentwert ist, bei dem die berechnete Vergleichszahl am größten ist.

**29.** Verfahren nach Anspruch 28, umfassend weiter den Schritt, daß man von den Vergleichszahlen, die Nachbarn der größten Vergleichszahl sind, einen gewichteten mittleren Volumen-Prozentwert unter Erhalt eines noch besser passenden Werts berechnet.

**30.** Verfahren nach Anspruch 29, umfassend weiter den Schritt, daß man von den Vergleichszahlen, die Nachbarn der größten Zahl sind, eine gewichtete mittlere räumliche Orientierung berechnet.

**Revendications**

1. Dispositif destiné à être porté par un utilisateur, pour signaler une absence de mouvement du dispositif pendant un laps de temps prédéterminé, comprenant :

   a) des moyens formant récipient (10) contenant un liquide (16),
   b) des moyens (76, 78A à 78E) servant à détecter un contact du liquide (16) avec chaque zone d'une pluralité de zones en lesquelles les moyens formant récipient (10) sont divisés, à chaque instant d'une pluralité d'instants dans le laps de temps prédéterminé, et servant à obtenir un ensemble de valeurs représentant le pourcentage de contacts du liquide (16) avec chacune des zones, à chacun des instants ;
   c) des moyens (86) servant à comparer les ensembles de valeurs ; et
   d) des moyens servant à signaler lorsque les ensembles de valeurs sont essentiellement identiques.

2. Dispositif selon la revendication 1, dans lequel les moyens de détection (76, 78A à 78E) comprennent une pluralité de condensateurs correspondant aux différentes zones, le liquide (16) pouvant s'écouler entre les plaques de chaque condensateur de façon jouer, au moins partiellement, le rôle d'un diélectrique pour ces condensateurs, et comprennent en outre des moyens servant à mesurer la capacité de chacun des condensateurs.

3. Dispositif selon la revendication 1 ou la revendication 2, dans lequel les moyens formant récipient (10) sont longs et cylindriques, et sont divisés en les zones, sur leur longueur, dans la direction axiale.

4. Dispositif selon l'une quelconque des revendications 1 à 3, dans lequel les moyens de détection (76, 78A à 78E) comprennent :

   a) une pluralité de moyens capacitifs correspondant aux zones, les moyens formant récipient (10) comprenant une paroi latérale périphérique (12), fermée, et comprenant chacun des moyens capacitifs des premier et deuxième conducteurs (76, 78A à 78E) le premier conducteur (76) étant disposé à proximité du deuxième conducteur (78A à 78E) réalisé par la paroi latérale périphérique, de façon à former les zones en lesquelles les moyens formant récipient (10) sont divisés par la pluralité de moyens capacitifs, le liquide (16) contenu à l'intérieur des moyens formant récipient (10) pouvant entrer en contact avec les moyens capacitifs, pour ainsi offrir une pluralité de mesures de capacités (C1 à C5) liées à l'étendue sur laquelle le liquide (16) qui se trouve dans les moyens formant récipient (10) entre en contact avec la pluralité de moyens capacitifs , et
   b) des moyens de calcul (86) servant à déterminer au moins la quantité de liquide (16) ou bien l'orientation spatiale des moyens formant récipient (10) par un traitement approprié des mesures de capacités (C1 à C5), par rapport à des valeurs de capacités de référence, pour différents pourcentages de remplissage du liquide (16) à l'intérieur des moyens formant récipient (10), à différentes orientations spatiales.

5. Dispositif selon la revendication 4, dans lequel les moyens formant récipient (10) ont une forme cylindrique le long et autour d'un axe longitudinal, et dans lequel les moyens capacitifs comprennent les premiers conducteurs (76) formés par une pluralité correspondante de premiers moyens formant bandes conductrices, alignés en série à l'intérieur des moyens formant récipient (10) coaxialement à l'axe longitudinal, et placés à proximité et en parallèle de la paroi latérale périphérique (12) formant les deuxièmes conducteurs (78A à 78E), ce qui divise les moyens formant récipient (10) en zones capacitives, la pluralité de premiers moyens formant bandes conductrices (76) et la paroi latérale périphérique (12) permettant la pluralité de mesures de capacités liées directement à l'étendue sur laquelle la pluralité de premiers moyens formant bandes conductrices (76) sont immergés dans le liquide (16) qui joue le rôle du diélectrique pour les moyens capacitifs, la pluralité de mesures de capacités pouvant en outre être traitées par rapport aux valeurs de capacités de référence pour différents pourcentages de remplissage du liquide (16) à l'intérieur des moyens formant récipient (10), à différentes orientations de référence, pour ainsi indiquer l'orientation spatiale des moyens formant récipient (10).

6. Dispositif selon la revendication 4, dans lequel le traitement de la pluralité de mesures de capacités se fait par comparaison de celles-ci aux valeurs de capacités de référence, pour ainsi obtenir un ajustement optimal entre les mesures de capacités et les valeurs de capacités de référence à différents pourcentages de remplissage et aux différentes orientations spatiales.

7. Dispositif selon la revendication 4, dans lequel les valeurs de capacités de référence sont déduites à partir du liquide (16) contenu dans les moyens formant récipient, ou bien à partir d'un fluide de référence jouant le rôle d'un deuxième diélectrique, pour une étendue connue de la pluralité de moyens capacitifs.

**8.** Dispositif selon la revendication 4, dans lequel une paroi interne (14) des moyens formant récipient (10) a une forme généralement cylindrique, fermée par des premiers et deuxièmes moyens de fermeture disposés aux extrémités opposées de la forme cylindrique, et dans lequel les premiers conducteurs sont disposés au voisinage de la paroi intérieure de façon à être immergés au moins en partie dans le liquide (16), indépendamment de l'orientation spatiale des moyens formant récipient (10).

**9.** Dispositif selon la revendication 4, dans lequel des moyens formant thermomètre (92) offrent une mesure de la température du liquide (16) à l'intérieur des moyens formant récipient (10), et dans lequel les moyens formant calculateur (86) servent à traiter la comparaison entre la pluralité de mesures de capacités et les valeurs de capacités de référence, par rapport à la mesure de température, pour déterminer au moins la quantité de liquide (16) à l'intérieur des moyens formant récipient (10) ou bien l'orientation spatiale des moyens formant récipient (10).

**10.** Dispositif selon la revendication 4, dans lequel le liquide comprend un liquide cryogénique (16).

**11.** Dispositif selon la revendication 10, dans lequel le liquide cryogénique (16) est constitué d'un mélange respirant contenant de l'oxygène et de l'azote.

**12.** Dispositif selon la revendication 1, dans lequel les moyens formant récipient (10) comprennent des moyens formant récipient interne (14) prévus pour contenir un liquide cryogénique en tant que liquide (16) et des moyens isolants entourant et renfermant les moyens formant récipient interne, de manière à retarder la conduction et le rayonnement de la chaleur ambiante vers le liquide cryogénique (16).

**13.** Dispositif selon la revendication 12, dans lequel les moyens isolants comprennent des moyens formant récipient extérieur (12), entourant et renfermant les moyens formant récipient intérieur (14), un matériau isolant (20) étant disposé dans un espace intermédiaire (18) formé entre les moyens formant récipient intérieur et extérieur (14, 12).

**14.** Dispositif selon la revendication 4, dans lequel les moyens formant calculateur (86) possèdent une base de données permettant de comparer l'ensemble des pourcentages de contacts mesurés à une pluralité d'ensembles, contenus dans la base de données, de valeurs de pourcentages de contacts de référence, pour les moyens formant récipient (10), à différents pourcentages volumiques et différentes orientations spatiales, les moyens formant calculateur (86) comprenant des moyens qui servent à calculer la somme des différences ou la somme des carrés des différences entre les valeurs de pourcentages de contacts de référence et les pourcentages de contacts mesurés, correspondants, pour chacun des différents ensembles de valeurs de pourcentages de contacts de référence, pour choisir un ajustement optimal, qui est un pourcentage volumique et/ou une orientation spatiale auquel ou à laquelle la somme de carrés calculée est la plus petite.

**15.** Dispositif selon la revendication 14, dans lequel les moyens formant calculateur (86) comprennent des moyens servant à mettre à l'échelle les pourcentages de contacts mesurés, de telle sorte qu'une valeur de non contact corresponde à "zéro" et qu'une valeur de contact total corresponde à "un", les ensembles de valeurs de pourcentages de référence étant également mis à l'échelle de telle sorte qu'une valeur de non contact corresponde à "zéro" et qu'une valeur de contact total corresponde à "un" ; des moyens servant à calculer un pourcentage volumique moyen par ajout des pourcentages de contacts mesurés, mis à l'échelle, et division de la somme par le nombre de zones ; et des moyens servant à calculer la somme des carrés des différences entre les valeurs de pourcentages de contacts de référence, mises à l'échelle, et les pourcentages de contacts mesurés, mis à l'échelle, correspondants, pour chacun des différents ensembles de valeurs de pourcentages de contacts de référence, mises à l'échelle, pour un nombre prédéterminé de pourcentages volumiques les plus proches du pourcentage volumique moyen calculé, ce en conséquence de quoi les calculs de somme des carrés ne sont pas effectués pour les ensembles de valeurs de pourcentages de contacts de référence, mises à l'échelle, pour tous les pourcentages volumiques pour lesquels les ensembles de valeurs de pourcentages de contacts de référence, mises à l'échelle, sont disponibles ; un ajustement optimal étant un pourcentage volumique auquel la somme de carrés calculée est la plus petite.

**16.** Dispositif selon la revendication 14, dans lequel les moyens formant calculateur (86) comprennent des moyens servant à mettre à l'échelle les pourcentages de contacts mesurés, de telle sorte qu'une valeur de non contact corresponde à "zéro" et qu'une valeur de contact total corresponde à "un", les ensembles de valeurs de pourcentages de contacts de référence étant également mis à l'échelle de telle sorte qu'une valeur de non contact corresponde à "zéro" et qu'une valeur de contact total corresponde à "un" ; des moyens servant à calculer un pourcentage volumique moyen par ajout des pourcentages de contacts mesurés, mis à l'échelle, et division de la somme par le nombre de zones ; des moyens servant à calculer la somme des carrés des différences entre les valeurs de pourcentages de contacts de référence, mises à l'échelle, et les pourcentages de contacts mesurés, mis à l'échelle, correspondants, pour chacun des différents ensembles de valeurs de pourcentages de contacts de référence, mises à l'échelle, pour le pourcentage volumique le plus proche du pourcentage volumique moyen calculé, et pour une pluralité de pourcentages volumiques, tant inférieurs que supérieurs audit pourcentage volumique le plus proche ; et des moyens servant à ajouter une constante à chaque somme des carrés, à diviser par une autre constante, et à calculer la racine carrée pour obtenir un chiffre comparatif ; un ajustement optimal étant un pourcentage volumique auquel le chiffre comparatif calculé est le plus grand.

**17.** Procédé de détermination d'une absence de mouvement des moyens formant récipient (10) pendant un laps de temps prédéterminé, comprenant les étapes qui consistent à :

> a) se procurer les moyens formant récipient (10) destinés à contenir un liquide (16),
> b) détecter un contact du liquide (16) avec chaque zone d'une pluralité de zones en lesquelles les moyens formant récipient (10) sont divisés, à chaque instant d'une pluralité d'instants dans le laps de temps prédéterminé, pour ainsi obtenir un ensemble de valeurs représentant le pourcentage de contacts du liquide (16) avec chacune des zones à chacun des instants ; et
> c) comparer les ensembles de valeurs de façon à détecter une absence de mouvement des moyens formant récipient (10) si les ensembles de valeurs sont essentiellement identiques.

**18.** Procédé selon la revendication 17, comprenant, en outre, l'étape qui consiste à actionner une alarme (154) lorsque les ensembles de valeurs sont essentiellement identiques.

**19.** Procédé selon la revendication 17, dans lequel l'étape de détection d'un contact comprend les opérations qui consistent à prévoir, dans les moyens formant récipient (10), une pluralité de condensateurs correspondant aux zones, le liquide pouvant s'écouler librement entre les plaques de chaque condensateur pour jouer, au moins partiellement, le rôle d'un diélectrique pour ces condensateurs, et à mesurer la capacité de chacun desdits condensateurs.

**20.** Procédé selon la revendication 17, comprenant, en outre, l'étape qui consiste à choisir les moyens formant récipient (10) de sorte que ce soit un long récipient cylindrique, divisé en les zones, sur sa longueur, dans la direction axiale.

**21.** Procédé selon la revendication 17, comprenant la détection d'une absence de mouvement des moyens formant récipient (10), selon les étapes supplémentaires, qui consistent à :

> a) prévoir les moyens de détection comprenant une pluralité de moyens capacitifs correspondant aux zones, où les moyens formant récipient (10) comprennent une paroi latérale périphérique (12), fermée, et chacun des moyens capacitifs comprend des premiers et deuxièmes conducteurs (76, 78A à 78E), les premiers conducteurs (76) étant disposés à proximité des deuxièmes conducteurs (78A à 78E) réalisés par la paroi latérale périphérique (14), de façon à diviser les moyens formant récipient (10) en zones capacitives délimitées par la pluralité de moyens capacitifs ;
> b) charger électriquement les moyens capacitifs, où le liquide (16) contenu à l'intérieur des moyens formant récipient (10) joue le rôle d'un diélectrique, pour ainsi permettre une pluralité de mesures de capacités liées à l'étendue sur laquelle la pluralité de moyens capacitifs sont immergés dans le liquide (16) à l'intérieur des moyens formant récipient (10) ;
> c) déterminer au moins la quantité du liquide (16) ou bien l'orientation spatiale des moyens formant récipient (10), par un traitement approprié des mesures de capacités par rapport à des valeurs de capacités de référence, pour différents pourcentages de remplissage du liquide à l'intérieur des moyens formant récipient (10), a différentes orientations spatiales ; et
> d) utiliser au moins la quantité déterminée de liquide (16) à l'intérieur des moyens formant récipient (10) ou bien l'orientation spatiale déterminée des moyens formant récipient (10).

**22.** Procédé selon la revendication 21, comprenant l'opération qui consiste à mettre les mesures de capacités à l'échelle, de telle sorte qu'elles soient directement liées à l'étendue sur laquelle les premiers conducteurs sont immergés dans le liquide à l'intérieur des moyens formant récipient (10).

**23.** Procédé selon la revendication 21, comprenant l'opération qui consiste à traiter les mesures de capacités en les comparant aux valeurs de capacités de référence, pour ainsi obtenir un ajustement optimal entre les mesures de capacités et les valeurs de capacités de référence, aux différents pourcentages de remplissage et aux différentes orientations spatiales.

**24.** Procédé selon la revendication 21, comprenant, en outre, l'opération qui consiste à prévoir les moyens formant récipient (10) ayant une forme cylindrique le long et autour d'un axe longitudinal, les premiers conducteurs étant réalisés par une pluralité de premiers moyens formant bandes conductrices (76) alignés coaxialement à l'axe longitudinal, le long et autour de ce dernier, et placés à proximité et en parallèle de la paroi latérale périphérique réalisant les deuxièmes conducteurs (78A à 78E), pour ainsi diviser les moyens formant récipient (10) en les zones capacitives, pour permettre la pluralité de mesures de capacités liées directement à l'étendue sur laquelle la pluralité de premiers moyens formant bandes conductrices sont immergés dans le liquide (16).

**25.** Procédé selon la revendication 21, dans lequel les moyens formant récipient (10) comprennent des moyens formant récipient interne (14) prévus pour contenir un liquide cryogénique (16) en tant que liquide et des moyens isolants (20) entourant et renfermant les moyens formant récipient interne (14), de manière à retarder la conduction et le rayonnement de la chaleur ambiante vers le liquide cryogénique (16).

**26.** Procédé selon la revendication 21, comprenant l'opération qui consiste à actionner un calculateur (86) de façon à calculer la somme des différences ou la somme des carrés des différences entre les valeurs de pourcentages de contacts de référence et les pourcentages de contacts mesurés, correspondants, pour chacun des différents ensembles de valeurs de pourcentages de contacts de référence, pour choisir un ajustement optimal, qui est un pourcentage volumique et/ou une orientation spatiale auquel ou à laquelle la somme des différences ou la somme des carrés des différences calculée est la plus petite

**27.** Procédé selon la revendication 26, comprenant l'opération qui consiste à actionner un calculateur (86) de façon à calculer un pourcentage volumique moyen, et, en outre, l'opération qui consiste à actionner le calculateur de façon à calculer la somme des carrés des différences entre les valeurs de pourcentages de contacts de référence et les pourcentages de contacts mesurés, correspondants, pour chacun des différents ensembles de valeurs de pourcentages de contacts de référence, pour un nombre prédéterminé de pourcentages volumiques les plus proches du pourcentage voiumique moyen calculé, ce en conséquence de quoi les calculs de somme des carrés ne sont pas effectués pour les ensembles de valeurs de pourcentages de contacts de référence, pour tous les pourcentages volumiques pour lesquels les ensembles de valeurs de pourcentages de contacts de référence sont disponibles, un ajustement optimal étant un pourcentage volumique auquel la somme de carrés calculée est la plus petite.

**28.** Procédé selon la revendication 26, comprenant l'opération qui consiste à actionner un calculateur (86) de façon à mettre à l'échelle les pourcentages de contacts mesurés, de telle sorte qu'une valeur de non contact corresponde à "zéro" et qu'une valeur de contact total corresponde à "un", les ensembles de valeurs de pourcentages de contacts de référence étant également mis à l'échelle de telle sorte qu'une valeur de non contact corresponde à "zéro" et qu'une valeur de contact total corresponde à "un" ; calculer le pourcentage volumique moyen en ajoutant les pourcentages de contacts mesurés, mis à l'échelle, et en divisant la somme par le nombre de zones, le calcul de la somme des carrés des différences entre les valeurs de pourcentages de contacts de référence, mises à l'échelle, et les pourcentages de contacts mesurés, mis à l'échelle, correspondants, pour chacun des différents ensembles de valeurs de pourcentages de contacts de référence, mises à l'échelle, pour le pourcentage volumique le plus proche du pourcentage volumique moyen calculé, et pour une pluralité de pourcentages volumiques, tant inférieurs que supérieurs audit pourcentage volumique le plus proche ; ajouter une constante à chaque somme des carrés, diviser par une autre constante, et calculer la racine carrée pour obtenir un chiffre comparatif ; un ajustement optimal étant un pourcentage volumique auquel le chiffre comparatif calculé est le plus grand.

**29.** Procédé selon la revendication 28, comprenant, en outre, l'opération qui consiste à calculer un pourcentage volumique moyen pondéré à partir des nombres comparatifs qui sont voisins des nombres comparatifs les plus grands, pour obtenir un ajustement optimal encore plus serré.

**30.** Procédé selon la revendication 29, comprenant, en outre, l'opération qui consiste à calculer une orientation spatiale moyenne pondérée à partir des nombres comparatifs qui sont voisins des nombres comparatifs les plus grands.

FIG. 1

48

42

40

46

44

38

64

68

12B

12

10

70

62

74

24

72

12C

28

26

30

34

32

34

14B

52

54

52A

52C

50

120

52B

52D

116

124

118

98A

104

122

100A

56

126

128

58

FIG. 5

EP 0 815 418 B1

FIG. 2

SEE ENLARGED DETAIL IN FIG. 5

SEE ENLARGED DETAIL IN FIG. 4

41

FIG. 3

FIG. 4

FIG.6

EP 0 815 418 B1

FIG. 7

EP 0 815 418 B1

302 — MEASURE CAPACITANCES → 304 — SCALE VALUES (0-1) → 306 — COMPUTE AVE. % FILL → 308 — SELECT NEAREST TABLE

316 — FORM EVALUATION TABLE ← 314 — REPEAT FOR NEAREST TABLES ← 312 — REFINE SQUARE ERRORS ← 310 — COMPUTE SUM OF SQUARES

318 — FIND MAXIMUM → 320 — COMPUTE WEIGHTED AVE.

322 — ESTIMATE PERCENT FILL AND ANGLE

FIG. 8

FIG. 9